(19)

**Europäisches Patentamt**
**European Patent Office**
**Office européen des brevets**

(11) **EP 4 239 579 B1**

(12) **EUROPEAN PATENT SPECIFICATION**

(45) Date of publication and mention
of the grant of the patent:
**29.10.2025 Bulletin 2025/44**

(21) Application number: **22159784.2**

(22) Date of filing: **02.03.2022**

(51) International Patent Classification (IPC):
$G06N\ 3/0464^{(2023.01)}$ $\quad$ $G06N\ 3/08^{(2023.01)}$
$G06N\ 3/084^{(2023.01)}$ $\quad$ $G06N\ 3/09^{(2023.01)}$
$G06N\ 3/0985^{(2023.01)}$ $\quad$ $G06T\ 7/50^{(2017.01)}$

(52) Cooperative Patent Classification (CPC):
**G06T 7/50; G06N 3/0464; G06N 3/08; G06N 3/084;**
**G06N 3/09; G06N 3/0985;** G06T 2207/20081;
G06T 2207/20084

(54) **SYSTEMS AND METHODS FOR MONOCULAR DEPTH ESTIMATION**

SYSTEME UND VERFAHREN ZUR MONOKULAREN TIEFENSCHÄTZUNG

SYSTÈMES ET PROCÉDÉS D'ESTIMATION DE PROFONDEUR MONOCULAIRE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**06.09.2023 Bulletin 2023/36**

(73) Proprietors:
• **TOYOTA JIDOSHA KABUSHIKI KAISHA**
**Toyota-shi, Aichi-ken, 471-8571 (JP)**
• **ETH Zurich - The Swiss Federal Institute of**
**Technology Zurich**
**8092 Zurich (CH)**

(72) Inventors:
• **ABBELOOS, Wim**
**1140 BRUSSELS (BE)**
• **PATIL, Vaishakh**
**8092 ZURICH (CH)**
• **SAKARIDIS, Christos**
**8092 ZURICH (CH)**
• **LINIGER, Alexander**
**8092 ZURICH (CH)**
• **VAN GOOL, Luc**
**8092 ZURICH (CH)**

(74) Representative: **Cabinet Beau de Loménie**
**103, rue de Grenelle**
**75340 Paris Cedex 07 (FR)**

(56) References cited:
• **JIN HAN LEE ET AL: "From Big to Small: Multi-**
**Scale Local Planar Guidance for Monocular**
**Depth Estimation", ARXIV.ORG, CORNELL**
**UNIVERSITY LIBRARY, 201 OLIN LIBRARY**
**CORNELL UNIVERSITY ITHACA, NY 14853, 23**
**September 2021 (2021-09-23), XP091042455**
• **JIANG HUALIE ET AL: "PLNet: Plane and Line**
**Priors for Unsupervised Indoor Depth**
**Estimation", 2021 INTERNATIONAL**
**CONFERENCE ON 3D VISION (3DV), IEEE, 1**
**December 2021 (2021-12-01), pages 741 - 750,**
**XP033999039, DOI: 10.1109/**
**3DV53792.2021.00083**
• **NEVEN DAVY ET AL: "Instance Segmentation by**
**Jointly Optimizing Spatial Embeddings and**
**Clustering Bandwidth", 2019 IEEE/CVF**
**CONFERENCE ON COMPUTER VISION AND**
**PATTERN RECOGNITION (CVPR), IEEE, 15 June**
**2019 (2019-06-15), pages 8829 - 8837,**
**XP033686310, DOI: 10.1109/CVPR.2019.00904**
• **ZHANG WEIDONG ET AL: "GeoLayout:**
**Geometry Driven Room Layout Estimation**
**Based on Depth Maps of Planes", 10 October**
**2020, ARXIV.ORG, PAGE(S) 632 - 648,**
**XP047593010**

EP 4 239 579 B1

**(Cont. next page)**

- **YANG FENGTING ET AL: "Recovering 3D Planes from a Single Image via Convolutional Neural Networks", 6 October 2018, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 87 - 103, ISBN: 978-3-540-74549-5, XP047488369**

- **VAISHAKH PATIL ET AL: "P3Depth: Monocular Depth Estimation with a Piecewise Planarity Prior", ARXIV.ORG, CORNELL UNIVERSITY LIBRARY, 201 OLIN LIBRARY CORNELL UNIVERSITY ITHACA, NY 14853, 5 April 2022 (2022-04-05), XP091199988**

**Description**

The present invention relates to the field of image processing and, in particular, to the estimation of depth of three-dimensional (3D) points represented by pixels in images. More particularly, the invention relates to depth estimation systems and computer-implemented depth estimation methods that determine depth based on monocular data (i.e., data obtained from a single camera/viewpoint, as opposed to stereo image data).

Depth estimation is a fundamental problem in computer vision. In general, it involves determining a value for the perpendicular coordinate of the 3D point depicted at a pixel of an image. The determined value may be considered to be an estimate or prediction of the true depth of the relevant 3D point. Typically, the processed image data corresponds to a still image or to a frame of a video.

Depth-estimation is important in a wide range of applications, including robotics and autonomous cars, and forms part of preliminary processing that enables an automatic system to interpret a scene and implement downstream tasks (e.g., to drive actuators and motors so that a robotic hand can grasp an object, to control steering in an autonomous vehicle so as to avoid an obstacle, and so on). Indeed, there is experimental evidence that, together with semantic segmentation, depth is the most vital vision-level cue for automatic systems to execute actions.

The present invention addresses depth estimation in the context where the source image data is monocular (i.e., generated by a single imaging device/camera). Monocular depth estimation involves the challenge of scale ambiguity, as the same input image can be generated by infinitely many 3D scenes.

The current trend in performing monocular depth estimation involves use of fully convolutional neural networks that output a dense depth prediction (i.e., a prediction of depth for each pixel in the image) and are trained to perform an end-to-end mapping from image data to depth maps, either with standard supervision on depth or with self-supervision by using the predicted depth to reconstruct neighbouring views of the scene. Most supervised approaches train the network using a loss function that is computed independently for each pixel, i.e., predictions at different pixels are treated separately. Such approaches ignore the high degree of regularity that exists in real-world 3D scenes, which generally yield depth maps that are piecewise smooth (i.e., real-world scenes tend to contain many regions within which neighbouring pixels have the same or similar depths).

Some known systems seek to leverage the fact that scenes often contain regions representing 3D points that are located on a common plane. Planes are the local first-order Taylor approximation for locally differentiable depth maps and they are easy to parameterize using three independent coefficients. Once a pixel is associated with a plane, its depth can be recovered from the position of the pixel and the coefficients of the associated plane. Some known systems explicitly predict the planes in a 3D scene represented by the image data. However, the accuracy of depth predictions made using known approaches is not as high as desired.

The present invention has been made in the light of the above problems.

The present invention provides a depth-estimation system to estimate depth of three-dimensional points corresponding to pixels in an image representing a three-dimensional scene, the depth-estimation system comprising:

a trained neural network architecture including a pixel-based depth estimator and a seed-pixel-based depth estimator parallel to the pixel-based depth estimator,
the pixel-based depth estimator comprising a plane coefficient detector configured to receive feature data of said image, to generate an intermediate output comprising plane coefficients of respective pixels in the image, and to generate a first depth estimate by converting the plane coefficients to depth values, and
the seed-pixel-based depth estimator comprising an offset-vector-field detector configured to receive feature data of said image, to generate an intermediate output comprising offset vectors between target pixels and seed pixels on planes in the three-dimensional scene represented by the image, to resample the plane coefficients produced by the plane coefficient detector using the offset vector field, and to generate a second depth estimate by converting the resampled plane coefficients to depth values; and
a fusion unit configured to receive, and to combine, the first and second depth estimates to produce a final depth estimate for output.

The monocular depth-estimation system according to the invention achieves depth-estimation performance which exceeds that of the state-of-the-art monocular depth-estimation systems, as demonstrated in experimental studies discussed below.

In certain embodiments of the invention the offset-vector-field detector is configured to generate a confidence map indicative of a level of confidence that a seed pixel is in the same plane as a target pixel, and to supply the confidence map to the fusion unit; and the fusion unit is configured to weight the first and second depth estimates based on confidence values in the confidence map generated by the offset vector field generator. This approach ensures that the depth estimate produced for a given pixel based on consideration of seed pixels influences the final depth estimate for this pixel primarily when there is a high degree of certainty that the seed pixel and target pixel truly lie on a common plane in the scene.

The offset-vector-field detector is configured to predict the offset **o(p) = q - p** between each pixel **p** and a seed pixel **q** on the same plane as pixel **p** in the scene. In certain preferred embodiments of the invention the seed-pixel-based depth estimator is configured to refine the offset vector field by cascading the offset vectors multiple times before resampling the plane coefficients, wherein a single cascading step consists in sampling the position **p + o(p) + o(p + o(p)).** Experimental studies have shown that the depth estimation accuracy improves in the case where the offsets are cascaded.

In certain embodiments of the invention the neural network architecture has been trained in a supervised end-to-end training process which minimizes a loss function $\mathcal{L}_{depth}$ defined according to the equation below:

$$\mathcal{L}_{depth} = \mathcal{L}\left(D_f, D^*\right) + \lambda\mathcal{L}(D_s, D^*) + \mu\,\mathcal{L}(D_i, D^*)$$

Where $D_f$ is the final depth estimate produced by the fusion unit, $D^*$ is the ground truth depth, $D_s$ is the second depth estimate produced by the seed-pixel-based depth estimator, $D_i$ is the first depth estimate produced by the pixel-based depth estimator, $\mathcal{L}(D_f, D^*)$ is a loss function that penalizes deviations between the final depth estimate produced by the fusion unit and the ground truth, $\mathcal{L}(D_s, D^*)$ is a loss function that penalizes deviations between the second depth estimate produced by the seed-pixel-based depth estimator and the ground truth, $\mathcal{L}(D_i, D^*)$ is a loss function that penalizes deviations between the first depth estimate produced by the pixel-based depth estimator and the ground truth, and $\lambda$ and $\mu$ are hyperparameters.

The supervised end-to-end training process may seek to minimize a total loss function $\mathcal{L}_{total}$ which includes a mean patch loss $\mathcal{L}_{MPL}$ additional to $\mathcal{L}_{depth}$ where the mean patch loss $\mathcal{L}_{MPL}$ is defined according to the equation below:

$$\mathcal{L}_{MPL} = \sum_{k=1}^{K} \|n_k - n_k^*\|_1$$

where K are all the non-overlapping patches in $D_f$ and $D^*$, and $n_k$ is the normal to a given patch k. Experimental studies have shown that the depth estimation accuracy improves in the case where the neural network architecture has been trained in a process which includes mean patch loss as an additional term in the loss function used during the training process.

Certain embodiments of the invention further comprise a guidance module.

The present invention further provides a method of training the above-mentioned depth-estimation system, the training method comprising:

training the neural network architecture to minimize a loss function $\mathcal{L}_{depth}$ defined according to the equation below:

$$\mathcal{L}_{depth} = \mathcal{L}\left(D_f, D^*\right) + \lambda\mathcal{L}(D_s, D^*) + \mu\,\mathcal{L}(D_i, D^*)$$

where $D_f$ is the final depth estimate produced by the fusion unit for an image input to the neural network architecture of the depth-estimation system, $D^*$ is the ground truth depth for said image, $D_s$ is the second depth estimate produced by the seed-pixel-based depth estimator for said image, $D_i$ is the first depth estimate produced by the pixel-based depth estimator for said image, $\mathcal{L}(D_f, D^*)$ is a loss function that penalizes deviations between the final depth estimate produced by the fusion unit and the ground truth, $\mathcal{L}(D_s, D^*)$ is a loss function that penalizes deviations between the second depth estimate produced by the seed-pixel-based depth estimator and the ground truth, $\mathcal{L}(D_i, D^*)$ is a loss function that penalizes deviations between the first depth estimate produced by the pixel-based depth estimator and the ground truth, and $\lambda$ and $\mu$ are hyperparameters.

Advantageously, the training may seek to minimize a total loss function $\mathcal{L}_{total}$ which includes a mean patch loss $\mathcal{L}_{MPL}$ additional to $\mathcal{L}_{depth}$ where the mean patch loss $\mathcal{L}_{MPL}$ is defined according to the equation below:

$$\mathcal{L}_{MPL} = \sum_{k=1}^{K} \|n_k - n_k^*\|_1$$

where K are all the non-overlapping patches in $D$ and $D^*$, and $n_k$ is the normal to a given patch k.

The above-recited training method produces a trained depth-estimation system as mentioned above, with its concomitant advantages.

The present invention still further provides a computer-implemented method of estimating depth of three-dimensional points corresponding to pixels in an image representing a three-dimensional scene, the method being carried out by a depth-estimation system according to the invention and comprising:

processing feature data of said image in first and second parallel paths;
in the first parallel path:

- generating an intermediate output comprising plane coefficients of respective pixels in the image, and
- generating a first depth estimate by converting the plane coefficients to depth values;

in the second parallel path:

- generating an intermediate output comprising predicted offset vectors between target pixels and seed pixels on planes in the three-dimensional scene represented by the image,
- using the predicted offset vectors to resample the plane coefficients produced in the first parallel path, and
- generating a second depth estimate by converting the resampled plane coefficients to depth values; and

combining the first and second depth estimates to produce a final depth estimate for output.

The above-mentioned method, may further comprise, in the second parallel path, the generating of a confidence map indicative of a level of confidence that a seed pixel is in the same plane as a target pixel, and the combining may comprise weighting the first and second depth estimates based on confidence values in the confidence map.

In the above-mentioned method, the generating of the offset vectors predicts the offset $o(p) = q - p$ between each pixel $p$ and a seed pixel $q$ on the same plane as pixel $p$ in the scene. The offset vector field may be refined by cascading the offset vectors multiple times before the plane coefficients are resampled to generate the second depth estimate, wherein a single cascading step consists in sampling the position $p + o(p) + o(p + o(p))$. As mentioned above, the accuracy of the depth estimates is further improved in the case of cascading the offsets.

Further features and advantages of the present invention will become apparent from the following description of certain embodiments thereof, given by way of illustration only, not limitation, with reference to the accompanying drawings in which:

Figure 1 illustrates, schematically, the main components of a depth-estimation system according to a generic embodiment of the present invention;
Figure 2 illustrates, schematically, an example of a pixel-based depth estimator that may be used in the system according to Fig.1;
Figure 3 illustrates, schematically, an example of seed-pixel-based depth estimator that may be used in the system according to Fig.1;
Figure 4 illustrates ground truth in regard to planes present in a 3D scene represented by an example image as well as an offset-vector field generated by an embodiment of the invention in relation to the same image;
Figure 5 shows images representing outputs generated at different steps of a method according to an example embodiment of the invention, illustrating that depth-estimation methods and systems according to the invention enable sharp depth discontinuities to be detected,
Figure 6 represents schematically a general encoder-decoder structure that may be used in embodiments of the invention;
Figure 7 represents schematically a feature fusion module that may be used in the structure illustrated in Fig.6;
Figure 8 represents schematically a residual convolution module that may be used in the structure illustrated in Fig.6;
Figure 9 represents schematically an adaptive output module that may be used in the structure illustrated in Fig.6;
Figure 10 represents schematically a plane coefficient decoder incorporating a plane coefficient guidance module, that may be used in certain embodiments of the invention;
Figure 11 represents schematically a preferred embodiment of the pixel-based depth estimator, incorporating a plane coefficient guidance module;
Figure 12 illustrates depth estimates produced for four example images by an embodiment of the invention called P3Depth, as well as depth estimates according to three comparative example techniques, and ground truth in regard to depth of points in the represented 3D scene;
Figure 13 shows front, side and top views reconstructed from depth estimates produced for an example image by an embodiment of the invention called P3Depth, as well as depth estimates according to two comparative example techniques, and ground truth in regard to the respective views; and

Figure 14 shows, in respect of three example images, qualitative results obtained when the P3depth embodiment of the invention predicts offset vector fields and estimates depth.

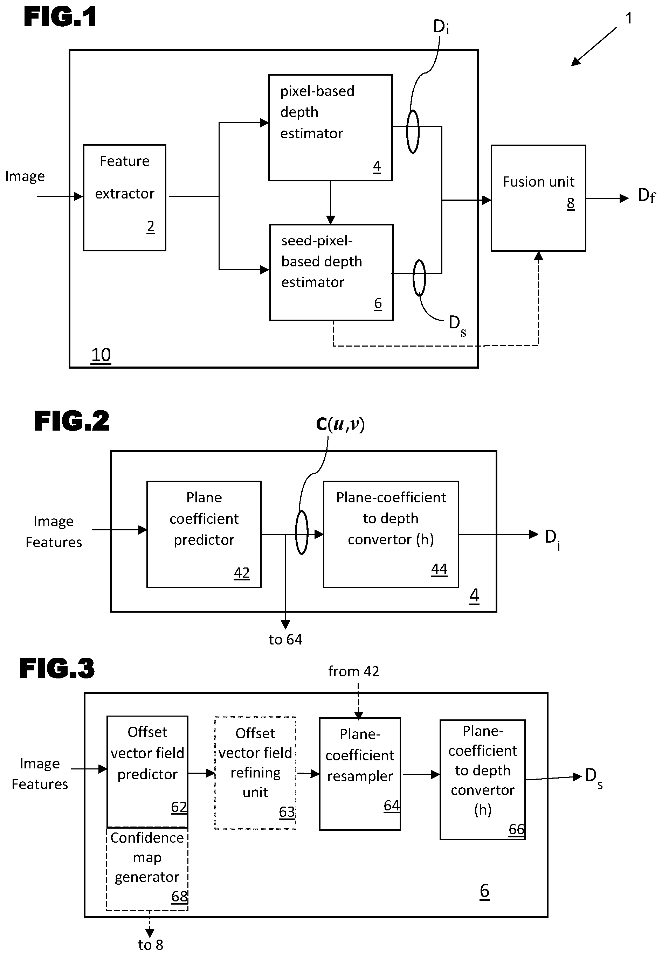

Monocular depth-estimation systems according to various embodiments of the invention, and computer-implemented methods of estimating depth in monocular images according to various embodiments of the invention will now be described with reference to Figs. 1 to 14.

The invention proposes a new CNN-based architecture configured to perform depth estimation. Based on knowledge about the high regularity of real 3D scenes, the CNN architecture according to the invention is trained to selectively leverage information from coplanar pixels to improve the depth predictions. In particular, the technique is based on a piecewise planarity prior (base assumption) which states that for each pixel, there is a seed pixel which shares the same planar 3D surface with the former.

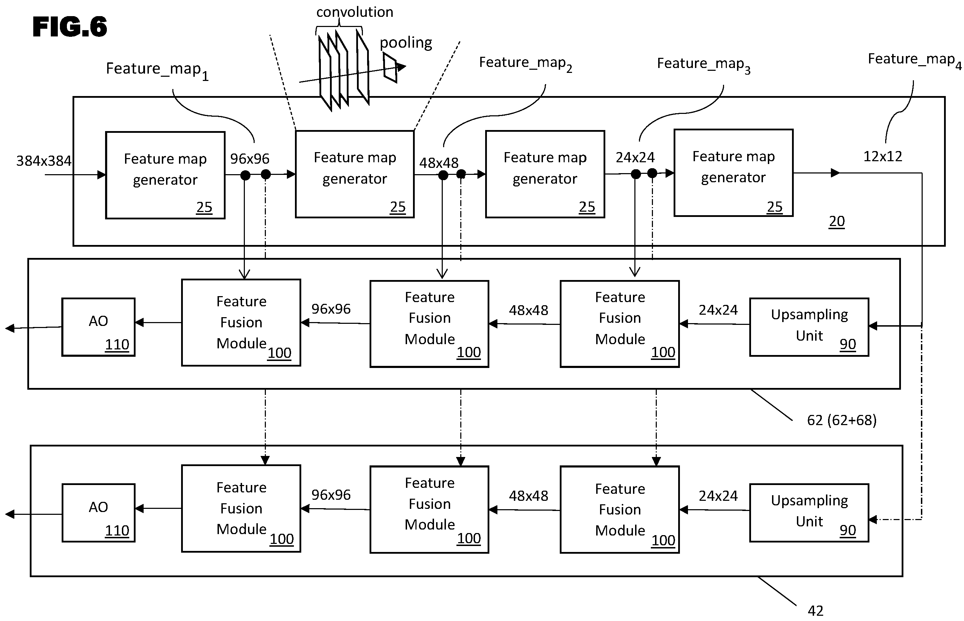

Motivated by this piecewise planarity prior, the invention proposes a CNN-based architecture comprising a novel combination of two heads, as illustrated in Fig.1. One head is a pixel-based depth estimator and the other head is a seed-pixel-base depth estimator. The two heads of the network share a common encoder and have separate decoders, as shown in Fig.1 and as discussed below with reference to Figs.6-10.

Fig.1 is a schematic representation of main modules comprised in the depth-estimation system 1 according to a first, generic embodiment of the invention. A monocular image stream is input to the common encoder, i.e., feature extractor 2, and the feature data from the common encoder is processed in parallel by the pixel-based depth estimator backbone 4, which includes functionality to estimate plane coefficients, and a seed-pixel-based depth estimator backbone 6, which includes functionality to generate an offset-vector field. The input data stream represents a scene imaged by an image-capture device such as a video camera. The stream may be a live feed output by a video camera (e.g., a video camera mounted on a vehicle), but the invention is not particularly limited having regard to the source of the image data input to the depth-estimation system 1 and it is to be understood that the system can operate not only on live data but also on recorded data.

In preferred embodiments of the invention the feature extractor 2 is a neural network structure, for example, a residual network structure and is trained to extract salient features from the initial image data.

The pixel-based depth estimator 4 is trained to generate a first depth estimate, $D_i$, based on pixel-level plane coefficients, and to output the initial depth estimate $D_i$ to a fusion unit 8. The seed-pixel-based depth estimator 6 is trained to generate a dense offset vector field that identifies the positions of seed pixels and to use the plane coefficients of the seed pixels to produce a second depth estimate, $D_S$, for each position. The seed-pixel-based depth estimator 6 is arranged to output the second depth estimate, $D_S$, to the fusion unit 8. Each of the pixel-based depth estimator 4 and the seed-pixel-based depth estimator 6 comprises trained convolutional neural network (CNN) structure, as shall be described below.

The fusion unit 8 is configured to output a final depth estimate, $D_f$, based on a combination of the first and second estimates $D_i$ and $D_S$. The fusion unit 8 is configured to adaptively combine the first and second depth estimates $D_i$ and $D_S$ and, in preferred embodiments of the invention, the weighting of the first and second depth estimates is based on a learned "confidence" parameter.

In preferred embodiments of the invention the entire architecture is trained end-to end thanks to the differentiability of the proposed component modules, and it learns to predict regular depth maps, with sharp edges at occlusion boundaries. In preferred embodiments of the invention, the architecture is trained using supervised learning during which ground truth depth values are available for the pixels in the input image data of the training data set.

A description will now be given of the functions performed by the above-mentioned components of the depth-estimation system 1, together with description of certain preferred embodiments of those components.

In order to be able to perform monocular depth estimation, a machine learning architecture (e.g., a neural network architecture) needs to learn a dense mapping $f_\theta : I(u, v) \rightarrow D(u, v)$, where $I$ is the input image with spatial dimensions $H \times W$, $D$ is the corresponding depth map of the same resolution, $(u, v)$ are pixel coordinates in the image space, and $\theta$ are the parameters of the mapping $f$. In the case of supervised learning, a ground-truth depth map $D^*$ is available for each image $I$ at training time. During training, the parameters $\theta$ are optimized such that the function $f_\theta$ minimizes the difference between the predicted depth and the ground-truth depth over the training set $T$.

This can be formalized as shown in Equation (1) below:

## Equation (1)

$$\min_{\theta} \sum_{(I,D^*) \in T} \mathcal{L}(f_\theta(I), D^*)$$

where $\mathcal{L}$ is a loss function that penalizes deviations between the prediction and the ground truth.

Furthermore, each pixel can be back-projected to the 3D space represented by the image, given a depth map $D$ and certain parameters of the camera generating the image data. More particularly, using the pinhole camera model and given the focal lengths ($f_x$, $f_y$) and the principal point ($u_0$, $v_0$), every pixel $\boldsymbol{p} = (\mathbf{u}, \mathbf{v})^T$ may be mapped to a 3D point $\boldsymbol{P} = (\mathbf{X}, \mathbf{Y}, \mathbf{Z})^T$ according to Equation (2) below

## Equation (2)

$$Z = D(u, v), \qquad X = \frac{Z(u - u_0)}{f_x}, \quad Y = \frac{Z(v - v_0)}{f_y}$$

Embodiments of the present invention make use of a plane coefficient representation for depth, before generating the desired depth map. Let it be supposed that the back-projected 3D point $\mathbf{P}$ corresponds to a planar part of the 3D scene represented by the image. The equation of the associated plane in the point-normal form can be written as $\mathbf{n} \cdot \mathbf{P} + \boldsymbol{d} = \mathbf{0}$, where $n = (a, b, c)^T$ is the normal vector to the plane and -d is the distance of the plane from the origin $(0,0,0)$ of the 3D coordinate system employed in representing the points in the 3D scene.

Substituting the coordinates of point P represented in Equation (2) above into the point normal equation produces Equation (3) below defining the inverse depth of point $\mathbf{P}$.

## Equation (3)

$$\frac{1}{Z} = \frac{-a}{f_x d} u + \frac{-b}{f_y d} v + \frac{1}{d} (\frac{a}{f_x} u_0 + \frac{b}{f_x} u_0 - c)$$

Thus, for image regions that depict planar 3D surfaces, the inverse depth is an affine function of pixel position, where the coefficients encode both the camera intrinsics (focal lengths and the principal point) and the 3D plane.

The term $\dfrac{-a}{f_x d}$ may be represented by $\hat{\alpha}$, the term $\dfrac{-b}{f_y d}$ may be represented by $\hat{\beta}$, and the term

$\dfrac{1}{d}(\dfrac{a}{f_x} u_0 + \dfrac{b}{f_x} u_0 - c)$ may be represented by $\hat{\gamma}$. Introducing a normalization factor $\rho = \sqrt{\hat{\alpha}^2 + \hat{\beta}^2 + \hat{\gamma}^2}$,

and normalizing $\alpha = \dfrac{\hat{\alpha}}{\rho}, \beta = \dfrac{\hat{\beta}}{\rho}, \gamma = \dfrac{\hat{\gamma}}{\rho}$, allows Equation (3) to be reformulated to express the depth $\boldsymbol{Z}$ at point $\mathbf{P}$ according to Equation (4) below.

## Equation (4)

$$Z = [(\alpha u + \beta v + \gamma)\rho]^{-1}$$

$C = (\alpha, \beta, \gamma, \rho)^T$ may be called the "plane coefficients", and the depth can then be expressed as $\boldsymbol{Z} = \boldsymbol{h}(\boldsymbol{C},\boldsymbol{u},\boldsymbol{v}).$

In embodiments of the invention, a multi-headed model is used, i.e., a neural network architecture including a plurality of heads and a common backbone/feature extractor as mentioned above. The pixel-based depth estimator head 4 of the model/network architecture 1, generates a first estimate of depth, $D_i$, by decomposing the mapping $f_\theta : I(u, v) \rightarrow D(u, v)$ into sub-tasks: a first sub-task determines a dense plane coefficient representation, $\boldsymbol{C(u,v)}$, for the image, and a second sub-task applies Equation (4) above to convert the plane coefficient representation, $\boldsymbol{C(u,v)}$, into the initial depth prediction $\boldsymbol{D_i}$. More formally, the mapping $f_\theta : I(u, v) \rightarrow D(u, v)$ is treated as a composition $f_\theta = h \circ (g_\theta, p)$, where $g_\theta : I(u, v) \rightarrow C(u, v)$ maps the input image to the plane coefficient representation, and $h: (C(u, v), u, v) \rightarrow D_i(u, v)$ applies Equation (4) at each pixel. During the process of training the pixel-based depth estimator head 4, a ground-truth depth map D* is available for each image $I$ in the training data set and supervision may be applied to the initial depth predictions $D_i$ using Equation (1) above.

Fig.2 illustrates schematically a preferred embodiment of the pixel-based depth estimator head 4, incorporating a plane coefficient predictor 42 trained and configured to perform the above-mentioned first sub-task to predict the plane coefficients $\boldsymbol{C(u,v)}$, and a plane-coefficient-to-depth convertor 44 trained and configured to perform the above-mentioned second sub-task to generate the initial estimate of depth, $\boldsymbol{D_i}$.

Predicting the plane coefficients **C(*u,v*)** as an intermediate output does not give an immediate advantage compared to directly predicting the depth. However, two pixels that depict the same 3D plane have the same parameters **C(*u,v*),** but generally a different depth. This fact is exploited by the second head 6 of the network, described below, which predicts depth by selectively bootstrapping the plane coefficients from a seed pixel. As indicated in Fig.2, the plane coefficients predicted in the pixel-based depth estimator 4 are supplied to seed-pixel-based depth estimator 6.

In embodiments of the present invention, the seed-pixel-based depth estimator 6 of the model/network architecture generates a second estimate of depth, $D_s$, by considering "seed pixels" which, within the 3D scene, are located on the same plane as a pixel of interest. The reasoning behind this approach is explained below.

Let us assume we have one pixel **p** which belongs to a planar surface in 3D. By definition, every other pixel on this planar surface has the same **C** values (i.e., the same values of the plane coefficients). Thus, in an ideal world the neural network architecture would only have to predict **C** at one of these pixels, **q,** in order to be able to compute correctly the depth values of all other pixels on this planar surface. This pixel **q** can be interpreted as a "seed pixel" that describes the plane. This notion may be expressed in terms of a "piecewise planarity prior" according to Definition 1 below:

**Definition 1.** (Piecewise planarity prior) For every pixel **p** with an associated 3D plane, there exists a seed pixel **q** in the neighbourhood of **p** which is also associated with the same plane as **p.**

However, it is not trivial to determine which pixel should be used as a seed pixel, especially as there generally will be multiple seed pixels that could be used in respect of a given pixel of interest. Moreover, there may be no seed pixel in respect of a given pixel of interest, i.e., if the pixel of interest does not lie on a plane in the scene. Thus, it is not trivial to determine the region in the image over which the depth should be bootstrapped from a given seed pixel.

In embodiments of the present invention the seed-pixel-based depth estimator 6 is trained to determine which pixels to use as seed pixels and over which region in the image a given seed pixel may be used to estimate depth.

On the assumption that the piecewise planarity prior according to Definition 1 holds true, the task of depth prediction for pixel **p** can also be solved by identifying **q.** This may involve predicting the offset **o(p) = q - p.** The offset vector field decoder in the neural network architecture according to embodiments of the invention is trained to predict a dense offset vector field **o(*u,v*).** Then the predicted offset vector field is used to resample the plane coefficients generated by the plane coefficient decoder 4, as indicated in equation (5) below.

## Equation (5)

$$C_S(p) = C(p + o(p))$$

using bilinear interpolation to handle fractional offsets.

Then, the resampled plane coefficients are used to compute a second depth prediction $D_s$. according to Equation (6) below.

## Equation (6)

$$D_S(u, v) = h(C_S(u, v), u, v)$$

based on the seed locations. This process allows the network to bootstrap the depth from the seed pixel.

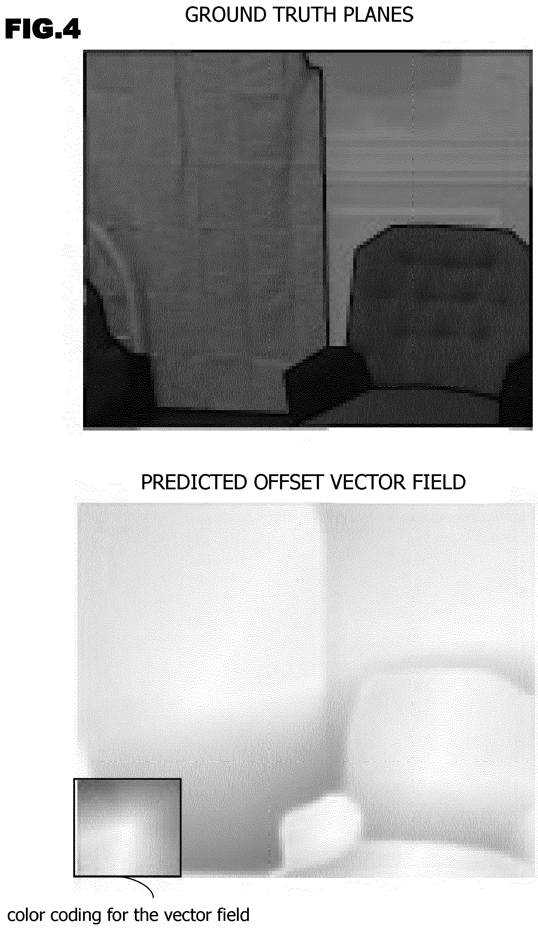

Fig.3 illustrates schematically a preferred embodiment of the seed-pixel-based depth estimator 6, incorporating an offset-vector-field predictor 62, a plane coefficient resampling unit 64 and a plane-coefficient to depth convertor 66. The offset-vector-field predictor 62 is trained and configured to predict the dense offset vector field **o(*u,v*).** The offset vector predicted for a pixel by the offset-field-vector predictor 62 tends to point towards a seed pixel with which it shares the same plane coefficients. This point is illustrated by Fig.4.

Fig.4 relates to an image from the NYU Depth-v2 dataset, this dataset being described in "Indoor segmentation and support inference from rgbd images" by Nathan Silberman et al, in European Conference on Computer Vision, 2012). The top picture in Fig.4 illustrates the true locations of planes in the 3D scene represented by the image. The bottom picture in Fig.4 illustrates the offset vector field predicted in respect of this image by the offset-vector-field predictor 62 in a trained depth-estimation system 1 according to the present embodiment of the invention.

The plane coefficient resampling unit 64 is trained and configured to resample the plane coefficients generated in the first sub-task performed by the plane coefficient decoder 4, e.g., the plane coefficients generated by the plane coefficient predictor 42 illustrated in Fig.2, using the predicted offset vectors generated by the offset-vector-field predictor 62. The plane-coefficient to depth convertor 66 is trained and configured to compute the second depth prediction $D_s$. according to Equation (6) above.

As noted above, the piecewise planarity prior according to Definition 1 is not always valid. So, at some locations, the initial depth prediction $D_i$ generated by the plane coefficient decoder 4 may be more accurate than the depth prediction, $D_s$, generated by the seed-pixel-based depth estimator 6. Accordingly, in embodiments of the invention the fusion unit 8 combines the initial depth prediction $D_i$ generated by the pixel-based depth estimator 4 and the depth prediction, $\boldsymbol{D_s}$, generated by the seed-pixel-based depth estimator 6 in an adaptive manner. In particular, the fusion unit 8 outputs depth estimates $D_f$ that are weighted averages of the initial depth prediction $\boldsymbol{D_i}$ generated by the pixel-based depth estimator 4 and the depth prediction, $\boldsymbol{D_s}$, generated by the seed-pixel-based depth estimator 6.

In preferred embodiments of the invention, the fusion unit 8 is configured to generate the final output depth estimates $\boldsymbol{D_f}$ based on a confidence parameter which quantifies the probability that the piecewise planarity prior is valid. In a preferred embodiment of the invention, the seed-pixel-based depth estimator 6 includes a confidence-map generator 68, as illustrated in dashed lines in Fig.3. The seed-pixel-based depth estimator 6 is trained and configured so that the confidence-map generator 68 generates a confidence map $F(u, v) \in [0,1]$ which indicates, for each position $(u, v)$ a prediction indicating the confidence of the model in using the predicted seed pixels for estimating depth via $\boldsymbol{D_s}$. The fusion unit 8 then adaptively fuses $\boldsymbol{D_i}$ and $\boldsymbol{D_s}$ according to Equation (7) below.

## Equation (7)

$$D_f(u, v) = F(u, v)D_s(u, v) + (1 - F(u, v))D_i(u, v)$$

In certain preferred embodiments of the invention, the seed-pixel-based depth estimator 6 is configured to refine the offset vector field by cascading the offset vectors multiple times before the plane coefficient maps are resampled by the plane coefficient resampling unit 64. For example, a single cascading step samples the position $p + o(p) + o(p + o(p))$. It may be considered that, in such embodiments, the seed-pixel-based depth estimator 6 includes an offset-vector-field refining unit 64. The motivation for this cascaded refinement is that seed pixels within the same planar region should converge to the center of the region, which helps accumulate information from more pixels in predicting the plane coefficients of the region as a whole. Cascading the offsets does not cause a problem in regard to depth that are made in respect of pixels without a reliable seed pixel, because the fusion unit 8 is configured to apply a low weight to the relevant depth prediction $\boldsymbol{D_s}$.

The system and components illustrated in Figs.1-3 operate in respective training and production phases. The description above focuses on the functioning after training, i.e., during the production phase. Further details regarding the training phase shall be given below.

During the training phase, the convolutional neural network structures in question are trained in a supervised learning process which trains the system end-to-end as a whole, while seeking to minimize a loss function. In certain embodiments of the invention, the loss function used in optimizing the system to predict values of $\boldsymbol{Di}$, $\boldsymbol{D_s}$ and $\boldsymbol{D_f}$ is defined by Equation (8) below.

## Equation (8)

$$\mathcal{L}_{depth} = \mathcal{L}\left(D_f, D^*\right) + \lambda\mathcal{L}(D_s, D^*) + \mu\,\mathcal{L}(D_i, D^*)$$

with $\lambda$ and $\mu$ being hyperparameters.

This loss function encourages (i) the pixel-based depth estimator head 4 to output a representation that is accurate across all pixels even when they have a high confidence value and (ii) the seed-pixel-based depth estimator head 6 to learn high confidence values for pixels for which the planarity prior holds and low confidence values for the converse.

As the skilled person will understand, the model is not supervised directly on the offsets. In fact, in principle the seed-pixel-based depth estimator could simply predict zero offsets everywhere and valid predictions $\boldsymbol{D_s}$ and $\boldsymbol{D_f}$ would still be produced, which would then be identical to $\boldsymbol{D_i}$. This unwanted behavior is avoided in practice thanks to the fact that the initial predictions $\boldsymbol{D_i}$ are erroneously smoothed near depth boundaries, due to the regularity of the mapping $f_\theta$ for the case of neural networks. As a result, for pixels on either side of a boundary, predicting a non-zero offset that points away from the boundary yields a lower value for $\mathcal{L}_{depth}$, because such an offset uses a seed pixel for $\boldsymbol{D_s}$ which is further from the boundary and suffers from smaller error owing to smoothing. Also due to regularity of the mapping that generates the offset vector field, these non-zero offsets are propagated from the boundaries to the inner parts of regions with smooth depth, helping the network to predict non-trivial offsets.

Nevertheless, in preferred embodiments of the invention, to obtain improved performance, the supervised learning that is applied to the depth-estimation system during the training phase makes use of a composite loss function in which $\mathcal{L}_{depth}$ is only one component. More particularly, the preferred loss function $\mathcal{L}_{total}$ includes an additional patch-level mean plane loss, $\mathcal{L}_{MPL}$, which is complementary to the previous components and contributes independently to learning regular depth maps. In other words:

$$\mathcal{L}_{total} = \mathcal{L}_{depth} + \mathcal{L}_{MPL}$$

The proposed patch-level mean plane loss enforces first-order consistency of the predicted 3D surfaces with the ground truth.

The formulation of the patch-level mean plane loss is based on the assumption that, given a pixel coordinate, the neighboring pixels to this pixel should lie on the same plane in the 3D space. So, the normal n of this plane should satisfy an overdetermined system of linear equations. However, ground-truth depth maps are usually captured by consumer-level sensors with noisy measurements and limited precision, and so use of the above regime for local fitting of normals does not guarantee that the true optimal solution is obtained.

Nevertheless, depth measurements still contain comprehensive details about the structure of the scene. This information can be aggregated locally to enforce first-order consistency between the predicted and the ground-truth 3D surface. Normals are one way in which this aggregation across patches can be performed. For an input patch, the corresponding normal **n** needs to satisfy

**A**n = **b**, such that $\|n\|_2 = 1$, where **n** is a data matrix build by stacking the 3D points in the patch and **b** is a vector of ones. The closed-form solution of this least-squares problem is represented by Equation (9) below.

## Equation (9)

$$n = \frac{(A^T A)^{-1} A^T b}{\|((A^T A)^{-1} A^T b\|_2}$$

To compute the mean plane loss, surface normals are first estimated for all K non-overlapping patches in $D$ and $D^*$ and then their difference is penalized via the mean loss function defined by Equation (10) below.

## Equation (10)

$$\mathcal{L}_{MPL} = \sum_{k=1}^{K} \|n_k - n_k^*\|_1$$

Given Equation (9), it can be seen that the mean patch loss, $\mathcal{L}_{MPL}$, directly affects the depth of all points inside the patch via **A**.

It can be understood that the depth-estimation system and method according to preferred embodiments of the invention estimate depth by selectively combining depth from each pixel and from its corresponding seed pixel. This formulation works because a common representation is used which captures pixelwise depth as well as planarity information. This is achieved by using a plane coefficient representation, which allows the supervision of the network to be performed only with depth. The main advantage of the plane coefficient representation is that the depth of a pixel in the image can be directly computed by the plane coefficients of a different pixel, under the assumption that the two pixels are on the same plane. This advantage forms the basis of the above-mentioned planarity prior and the selective planar depth bootstrapping using seed pixels. It should be noted that the embodiments of the invention do not make an explicit prediction of planes but rather uses a plane coefficient representation as an appropriate output space for defining interactions between pixels based on planarity priors.

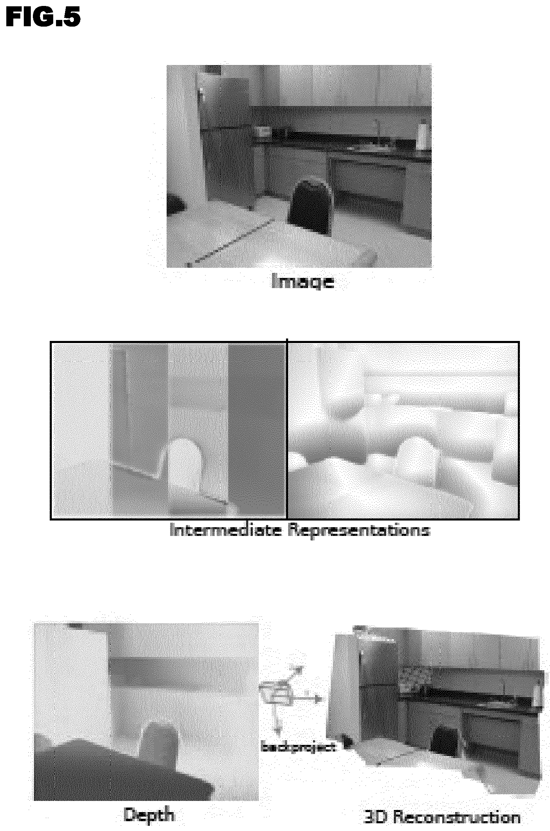

In the depth-estimation system and method according to preferred embodiments of the invention the depth predictions from the two heads are fused adaptively, notably based on a confidence map, in order to down-weigh the offset-based prediction and rely primarily on the basic depth prediction in regions where the piecewise planarity prior is not valid, e.g., on parts of the scene with highfrequency structures. During training of the system, supervision on the offsets and confidence map is applied implicitly, by virtue of the supervision of the fused depth prediction. Thanks to using seed pixels for prediction, the model implicitly learns to group pixels based on their membership in smooth regions of the depth map. This helps preserve sharp depth discontinuities, as illustrated in Fig.5.

Fig.5 illustrates a real-world scene in which there is a high degree of regularity. Fig.5 also shows intermediate representations of the scene that may be considered to be generated within systems according to the invention, as well as a representation of the final depth map $D_f(u, v)$ generated by the system and a 3D reconstruction based on that final depth map. It can be seen that the system and method according to the invention predicts high-quality depth maps which include sharp edges at occlusion boundaries and which yield consistent 3D reconstructions.

As mentioned above, the neural network structure 10 includes a single encoder 2 and each of the pixel-based depth estimator 4 and the seed-pixel-based depth estimator 6 comprises a respective decoder. In preferred embodiments of the invention, the encoder 2 is based around a feed-forward residual network backbone configured to generate feature maps at multiple scales. Fig.6 illustrates the general structure of a preferred implementation 20 of encoder coupled to a first decoder (which generally represents offset-vector-field decoder 62, or the combination of offset-vector-field decoder 62 with confidence map generator 68), and a second decoder (which generally represents plane coefficient decoder 42). The general form of the neural network structure illustrated in Fig.6 is adapted from the deep neural network structure described by Ke Xian, Chunhua Shen, Zhiguo Cao, Hao Lu, Yang Xiao, Ruibo Li, and Zhenbo Luo in "Monocular relative depth perception with web stereo data supervision", see Proceedings of the IEEE Conference on Computer Vision and Pattern Recognition (CVPR), June 2018.

As shown in Fig.6, the encoder 20 includes a feed-forward neural network backbone which is a convolutional neural network (CNN) structure implemented as a ResNet. In this CNN structure 20, the convolution layers and pooling layers are arranged to generate feature maps at successively larger scales and may be considered to form a series of feature map generators 25. In the illustrated example, the input image data has dimensions 384x384 and the successive feature map generators generate feature maps at 96x96, 48x48, 24x24 and 12x12, which are labelled, respectively, as feature_map$_1$, feature_map$_2$, feature_map$_3$, and feature_map$_4$ in Fig.6.

The decoders make use of three types of modules: feature fusion modules 100, residual convolution modules 140 and adaptive output modules 110 described below.

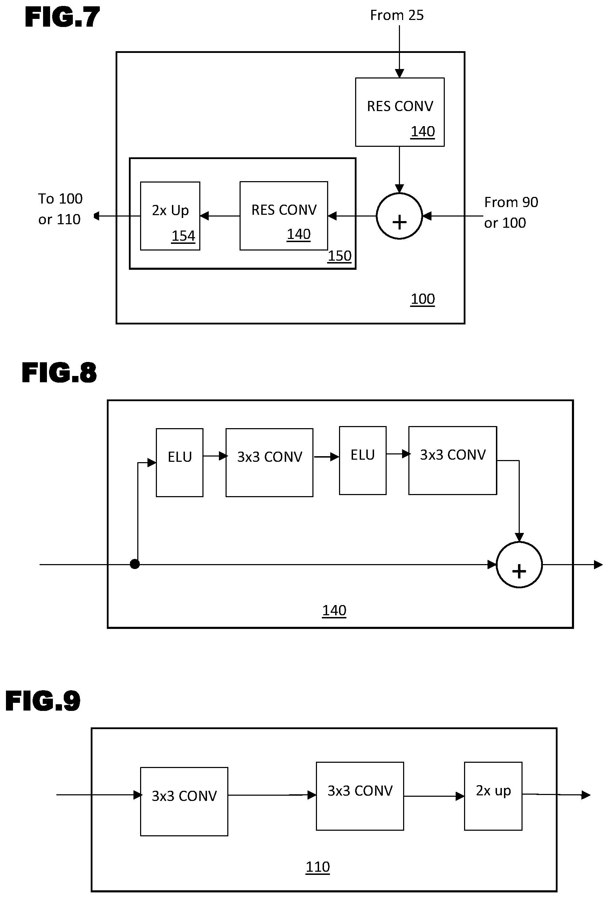

As illustrated in the example shown in Fig.7, a feature fusion module 100 uses a first residual convolution block 140a to transform the skip connection feature map from the ResNet encoder 20. The output of the first residual convolution block 140a is fused with the output of the preceding feature fusion block 100 (or the output of up-sampling unit 90 of Fig.6, as applicable) using a summation operation. Finally, the feature maps are up-sampled to match the resolution of the next layer's input.

As illustrated in the example shown in Fig.8, a residual convolution module 140 is a series of two units of ELU (exponential linear unit) and $3 \times 3$ convolution operations arranged to merge the output of a preceding decoder feature map output with a preceding feature fusion module output.

As illustrated in the example shown in Fig.9, the adaptive output module 110, which is applied at the last stage to get the final output of the general decoder structure 70 shown in Fig.6, consists of two $3 \times 3$ convolution operations followed by up-sampling.

In a specific implementation used in preferred embodiments of the invention, in the decoder structure constituting the plane coefficient decoder 42, the last layer of the decoder head is modified, compared to the adaptive output unit 110 illustrated in Figs.6 and 9, to output 4-channels for each planar coefficient instead of single channel depth.

In a specific implementation used in preferred embodiments of the invention, in the decoder structure constituting the offset vector field decoder 62, the last layer of the decoder head is modified, compared to the adaptive output unit 110 illustrated in Figs.6 and 9, to output 3-channels, i.e., two channels for the offset vector field and one for the confidence. The offset vector field is restricted by tanh layers and the confidence is generated through a sigmoid layer.

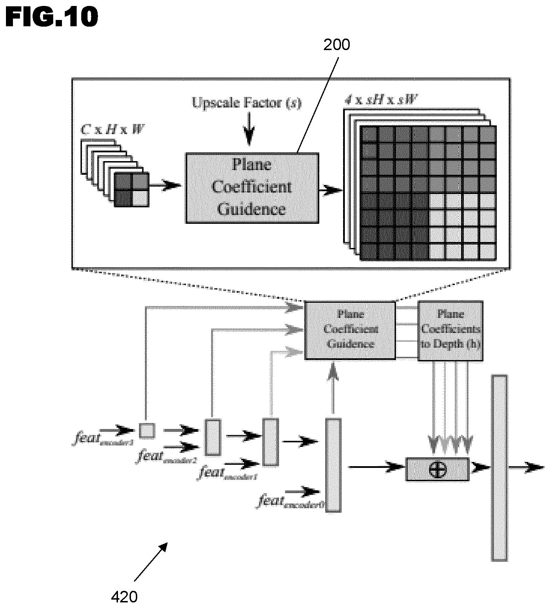

In certain preferred embodiments of the invention the plane coefficient predictor 42 incorporates a guidance module. Fig.10 illustrates a preferred embodiment of a plane coefficient predictor 420 incorporating a plane coefficient guidance module 200.

In the example illustrated in Fig.10, the output of each decoder block 25 is passed through the plane coefficient guidance module 200 to generate 4 channels of plane coefficients. The output size of the guidance module 200 is up sampled to match the input size of last decoder layer. At the end, these plane coefficients from each scale are converted into depth. All these depth maps are concatenated with feature map of the previous decoder layer passed to the last decoder layer.

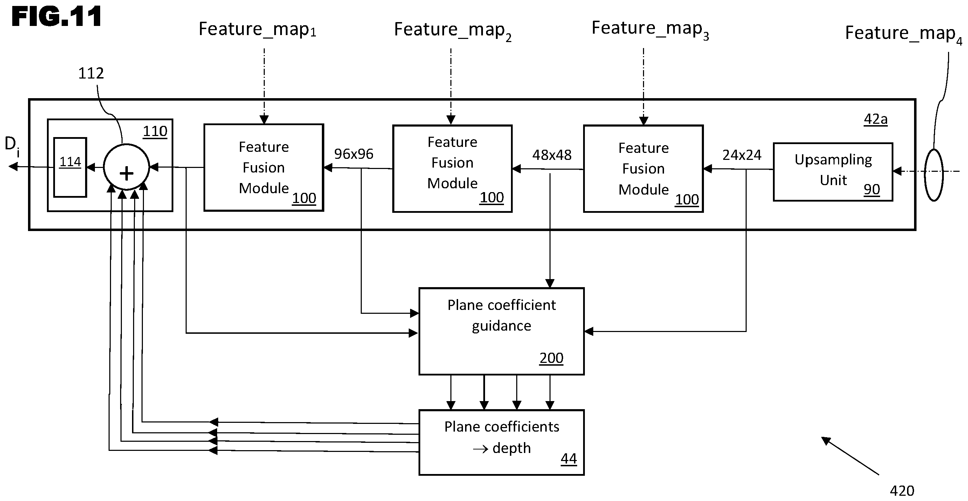

Fig.11 illustrates a preferred embodiment of the pixel-based depth estimator 4, in which a decoder 42a of the type illustrated in Fig.6, is used in association with a plane coefficient guidance module 200. In this embodiment, the output of each of the feature fusion units 100 passes through the plane coefficient guidance module 200 (as shown in Fig 10). The concatenation of all these outputs passes through the adaptive output unit 110 to yield the pixel-based depth estimate Di. In this embodiment, the adaptive output unit 110 includes a combining module 112 as well as a convolution module 114.

It will be understood that depth-estimation systems according to the invention are generally implemented digitally, that is, by implementing in software the neural network structures discussed herein, their combinations and training. Accordingly, the present invention provides a computer system programmed to implement the depth-estimation system described above, according to any of its embodiments. In a similar way, the present invention provides a non-transitory computer-readable medium containing instructions which, when executed by a computer system, cause the computer system to implement a depth-estimation system or a depth-estimation method as described above, according to any of their embodiments.

Experimental Studies

A number of studies were performed to evaluate the performance of a depth-estimation method according to an embodiment of the invention, notably in comparison with the performance of other algorithms/systems, by processing image data from a number of datasets.

The studies were performed using an example embodiment of the invention called P3Depth in which the depth-estimation system 1 was implemented using a pixel-based depth estimator according to the embodiment illustrated in Fig.2, and a seed-pixel-based depth estimator according to the embodiment illustrated in Fig.3 (including the confidence-map generator 68), and the fusion unit was configured to adaptively merge the depth estimates $D_i$ and $D_s$ on the basis of the confidence map F($u$, $v$) according to equation (7) above. Except where otherwise stated, the end-to-end supervised learning made use of the loss function $\mathcal{L}_{total} = \mathcal{L}_{depth} + \mathcal{L}_{MPL}$ with $\mathcal{L}_{depth}$ according to Equation (8) and with $\mathcal{L}_{MPL}$ according to Equation (10).

The P3depth embodiment of the invention used in the experimental studies employed an encoder/decoder structure as described above in connection with Figs.6 to 9, with the last layer of the plane coefficient decoder 42 modified to output 4-channels for each planar coefficient instead of single channel depth, and the last layer of the offset vector field decoder 62 modified to output 3-channels, i.e., two channels for the offset vector field and one for the confidence.

Other implementation details of the P3Depth embodiment used in the experiments include the following:

- the pixel-based depth estimator head and seed-pixel-based depth estimator head were fed by a feature extractor 2 implemented as a ResNet101 encoder (see "Deep residual learning for image recognition." by Kaiming He et al, in Proceedings of the IEEE conference on computer vision and pattern recognition, 2016) initialized with pre-trained ImageNet weights (see "Imagenet classification with deep convolutional neural networks" by Alex Krizhevsky et al, in Advances in neural information processing systems, 2012). This initialization helped to achieve competitive results.

- The pixel-based depth estimator and the seed-pixel-based depth estimator were initialized with weights drawn from a normal distribution with $\sigma = 0.01$.
- The pixel-based depth estimator head was configured to output four channels, one for each plane coefficient.
- The pixel-based depth estimator was additionally equipped with a guidance module.
- The seed-pixel-based depth estimator head was configured to output three channels: one for each coordinate of the offsets and one for confidence.
- The offset vectors were restricted via a tanh layer to have a maximum length of $\tau$ in normalized image coordinates. $\tau$ was set to 0.1 by default and two steps of cascaded refinement were applied to the offsets.
- The confidence map was predicted through a sigmoid layer.
- For all experiments, a batch size of 8 was used and the Adam optimizer described by Diederik P. Kingma et al, in "Adam: a method for stochastic optimization" (International Conference on Learning Representations, ICLR,2015, Yoshua Bengio and editors) was employed with a learning rate of $10^{-4}$ and a weight decay of $10^{-4}$.
- The neural network architecture was trained for 25 epochs (although predictions of reasonably- good quality were being produced from epoch 5). The learning rate was reduced every 5 epochs by a factor of 10 using a step scheduler.
- The training images were resized similarly to the approach used in "From big to small: Multi-scale local planar guidance for monocular depth estimation" by Jin Han Lee et al, op. cit.
- For all direct depth losses, the loss formulation from "Depth map prediction from a single image using a multi-scale deep network" by David Eigen et al, in Advances in Neural Information Processing Systems, 2014 was employed.

The loss weights $\lambda$ and $\mu$ are set to 0.5.

- In addition, the mean plane loss was applied using the final depth prediction $D_f$.
- The performance of the seed-pixel-based depth estimator head is better when dense supervision is used. Hence, in the example embodiment $D_s$ was supervised using completed $D^*$. To complete $D^*$, the depth inpainting method from the "Indoor segmentation and support inference from rgbd images" paper by Nathan Silberman et al, op cit. was used.
- The inpainted ground truth was also used for computing the mean plane loss to provide stability to the SVD algorithm for least squares.
- Finally, the data augmentation techniques from Jin Han Lee et al, op. cit. were applied.

The datasets used in the experiments included:

- NYU Depth-v2 (described by Nathan Silberman et al, op. cit.),
- KITTI (described in "Vision meet robotics: The Kitti dataset." by Andreas Geiger et al, in The International Journal of Robotics Research, 32(11):1231-1237, 2013),
- ScanNet (described in "Scannet: Richly-annotated 3d reconstructions of indoor scenes" by Angela Dai et al, in Proc. Computer Vision and Pattern Recognition (CVPR), 2018),

- SUN-RGBD (described in "SUN RGB-D: An RGB-D scene understanding benchmark suite" by Shuran Song et al, in 2015 IEEE Conference on Computer Vision and Pattern Recognition (CVPR), 2015),
- DIODE Indoor (described in "DIODE: A Dense Indoor and Outdoor Depth Dataset" by Igor Vasiljevic et al, arXiv e-prints, abs/1908.00463, 2019), and
- ETH-3D (described in "A Multiview stereo benchmark with high-resolution images and multi-camera videos" by Thomas Schöps et al, in 2017 IEEE Conference on Computer Vision and Pattern Recognition (CVPR), 2017).

The main datasets used in the training and testing of the P3Depth embodiment of the invention were the NYU Depth-v2 and KITTI datasets. The other four datasets were used for zero-shot testing, that is, evaluating the P3Depth embodiment using datasets that had not been used during the training (so as to determine how well the trained network architecture generalized to inputs different from those used during the training). The resolution of all images was reduced to 640×480.

The NYU Depth-v2 dataset consists of 464 indoor scenes of size 640 × 480. In the experiments, these scenes were split into 249 scenes for training and 215 for testing, using the split described by Jin Han Lee et al op. cit., July 2019, and the test set was based on the approach described by David Eigen et al, op. cit.

KITTI is dataset developed in view of autonomous driving and consists of 61 outdoor scenes of different types. In the experiments, these scenes were split into 32 scenes for training and 29 for testing, using the split described by Eigen et al op. cit., and by Garg et al in "Unsupervised CNN for single view depth estimation: Geometry to the rescue" in European Conference on Computer Vision (ECCV), 2016.

Details of the six datasets involved in the experimental studies are given in Table 1 below.

**TABLE 1**

| Dataset | #Training | #Testing | Sup. Type | Scene Type |
|---|---|---|---|---|
| NYU Depth-v2 | 24,231 | 654 | Kinect | Indoor |
| KITTI | 23,488 | 697 | LiDAR | Outdoor |
| ScanNet | - | 2167 | Kinect | Indoor |
| SUN-RGBD | - | 5050 | Mixed* | Indoor |
| DIODE Indoor | - | 325 | LiDAR | Indoor |
| ETH-3D | - | 454 | LiDAR | Mixed |

where: Sup. Type refers to the type of supervision, and Mixed* indicates that a mix of RGBD sensors are used.

In order to evaluate the performance of the P3Depth embodiment of the invention relative to other depth-estimation systems, a number of evaluation metrics were used, notably various depth estimation metrics that are standard in this field. In particular, the following evaluation metrics were used: root mean square error (RMSE) and its log variant (RMSElog), Log10 error, absolute (A.Rel) and squared (S.rel) mean relative error, and the percentage of inlier pixels with $\delta$. The maximum depth for KITTI was set to 50m and 80m for the Garg and Eigen splits respectively. For NYU Depth-v2, the maximum depth was set to 10m as per the Eigen split. Zero-shot transfer was performed by using a model trained on NYU Depth-v2 without additional fine-tuning. The maximum depth for this task was set to 10m across all four test datasets. In all evaluations, the predicted depth was rescaled so that its median matched that of the ground truth, as per standard practice.

Study 1

Table 2 below summarizes the values of various depth estimation metrics that were generated in respect of depth estimations produced by the example embodiment of the invention and by various comparative examples, in experiments performed by training all the compared systems using the NYU Depth-v2 dataset. The comparison was performed on the Eigen split. In Table 2, nF indicates the number of frames and * indicates self-supervised methods.

**TABLE 2**

| Method | A.Rel | Log10 | RMSE | $\delta_1$ | $\delta_2$ | $\delta_3$ |
|---|---|---|---|---|---|---|
| | Lower values are better | | | Higher values are better | | |
| **Plane-detection-based methods** | | | | | | |
| PlaneNet [41] | 0.142 | 0.060 | 0.514 | 0.812 | 0.957 | 0.989 |

(continued)

| Method | A.Rel | Log10 | RMSE | $\delta_1$ | $\delta_2$ | $\delta_3$ |
|---|---|---|---|---|---|---|
| | *Lower values are better* | | | *Higher values are better* | | |
| **Plane-detection-based methods** | | | | | | |
| PlaneRCNN [40] | 0.124 | 0.077 | 0.644 | - | - | - |
| Yu et al [78] | 0.134 | 0.057 | 0.503 | 0.827 | 0.963 | 0.990 |
| P2 Net (5F)* [77] | 0.147 | 0.062 | 0.553 | 0.801 | 0.951 | 0.987 |
| StruMonoNet [72] | 0.107 | 0.046 | 0.392 | 0.887 | 0.980 | 0.995 |
| **Other monocular depth estimation methods** | | | | | | |
| Saxena et al [57] | 0.349 | - | 1.214 | 0.447 | 0.745 | 0.897 |
| Karsch et al [23] | 0.349 | 0.131 | 1.21 | - | - | - |
| Liu et al [44] | 0.335 | 0.127 | 1.06 | - | - | - |
| Ladicky et al [30] | - | - | - | 0.542 | 0.829 | 0.941 |
| Li et al [36] | 0.232 | 0.094 | 0.821 | 0.621 | 0.886 | 0.968 |
| Wang et al [66] | 0.220 | 0.094 | 0.745 | 0.605 | 0.890 | 0.970 |
| Liu et al [43] | 0.213 | 0.087 | 0.759 | 0.650 | 0.906 | 0.974 |
| Roy et al [55] | 0.187 | 0.078 | 0.744 | - | - | - |
| Eigen et al [9] | 0.158 | - | 0.641 | 0.769 | 0.950 | 0.988 |
| Chakrabati [4] | 0.149 | - | 0.620 | 0.806 | 0.958 | 0.987 |
| Li et al [37] | 0.143 | 0.063 | 0.635 | 0.788 | 0.958 | 0.991 |
| Laina et al [31] | 0.127 | 0.055 | 0.573 | 0.811 | 0.953 | 0.988 |
| Fu et al [12] | 0.115 | 0.051 | 0.509 | 0.828 | 0.965 | 0.992 |
| Yin et al [74] | 0.108 | 0.048 | 0.416 | 0.875 | 0.976 | 0.994 |
| Huynh et al [22] | 0.108 | - | 0.412 | 0.882 | 0.980 | 0.996 |
| Lee et al [32] | 0.110 | 0.047 | 0.392 | 0.885 | 0.978 | 0.994 |
| **P3Depth Embodiment** | **0.104** | **0.043** | **0.356** | **0.898** | **0.981** | **0.996** |

Where the methods in the comparative examples are described in:

PlaneNet [41]: Chen Liu, Jimei Yang, Duygu Ceylan, Ersin Yumer, and Yasutaka Furukawa. "PlaneNet: Piece-wise planar reconstruction from a single RGB image". In Proceedings of the IEEE Conference on Computer Vision and Pattern Recognition (CVPR), 2018.

PlaneRCNN [40]: Chen Liu, Kihwan Kim, Jinwei Gu, Yasutaka Furukawa, and Jan Kautz. "PlaneRCNN: 3d plane detection and reconstruction from a single image". In Proceedings of the IEEE/CVF Conference on Computer Vision and Pattern Recognition (CVPR), 2019.

Yu et al [78]: Zehao Yu, Jia Zheng, Dongze Lian, Zihan Zhou, and Shenghua Gao. "Single-image piece-wise planar 3d reconstruction via associative embedding". In Proceedings of the IEEE/CVF Conference on Computer Vision and Pattern Recognition (CVPR), 2019.

P2 Net (5F)* [77]: Zehao Yu, Lei Jin, and Shenghua Gao. "P2Net: Patch-match and plane-regularization for unsupervised indoor depth estimation". In The European Conference on Computer Vision (ECCV), 2020.

StruMonoNet [72]: Zhenpei Yang, Li Erran Li, and Qixing Huang. "Strumononet: Structure-aware monocular 3d prediction". In Proceedings of the IEEE/CVF Conference on Computer Vision and Pattern Recognition (CVPR), 2021.

Saxena et al [57]: Ashutosh Saxena, Min Sun, and Andrew Y. Ng. "Make3D: Learning 3d scene structure from a single still image". IEEE Transactions on Pattern Analysis and Machine Intelligence, 31(5):824-840, 2009.

Karsch et al [23]: Kevin Karsch, Ce Liu, and Sing Bing Kang. "Depth transfer: Depth extraction from video using non-parametric sampling". IEEE transactions on pattern analysis and machine intelligence, 36(11):2144-2158, 2014.

Liu et al [44]: Miaomiao Liu, Mathieu Salzmann, and Xuming He. "Discrete-continuous depth estimation from a single image." In Proceedings of the IEEE/CVF Conference on Computer Vision and Pattern Recognition (CVPR), 2014.

Ladicky et al [30]: Lubor Ladicky, Jianbo Shi, and Marc Pollefeys. "Pulling things out of perspective". In Proceedings of the IEEE/CVF Conference on Computer Vision and Pattern Recognition (CVPR), 2014.

Li et al [36]: Bo Li, Chunhua Shen, Yuchao Dai, Anton Van Den Hengel, and Mingyi He. "Depth and surface normal estimation from monocular images using regression on deep features and hierarchical crfs". In Proceedings of the IEEE/CVF Conference on Computer Vision and Pattern Recognition (CVPR), 2015.

Wang et al [66]: Peng Wang, Xiaohui Shen, Zhe Lin, Scott Cohen, Brian Price, and Alan L Yuille. "Towards unified depth and semantic prediction from a single image". In Proceedings of the IEEE/CVF Conference on Computer Vision and Pattern Recognition (CVPR), 2015.

Liu et al [43]: Fayao Liu, Chunhua Shen, Guosheng Lin, and Ian Reid. "Learning depth from single monocular images using deep convolutional neural fields". IEEE Transactions on Pattern Analysis and Machine Intelligence, 38(10):2024-2039, 2016.

Roy et al [55]: Anirban Roy and Sinisa Todorovic. "Monocular depth estimation using neural regression forest". In Proceedings of the IEEE/CVF Conference on Computer Vision and Pattern Recognition (CVPR), 2016. 7

Eigen et al [9]: David Eigen, Christian Puhrsch, and Rob Fergus. "Depth map prediction from a single image using a multi-scale deep network". In Advances in Neural Information Processing Systems, 2014.

Chakrabati [4]: Ayan Chakrabarti, Jingyu Shao, and Gregory Shakhnarovich. "Depth from a single image by harmonizing overcomplete local network predictions". In NIPS, 2016.

Li et al [37]: Jun Li, Reinhard Klein, and Angela Yao. "A two-streamed network for estimating fine-scaled depth maps from single rgb images". In Proceedings of the IEEE International Conference on Computer Vision, 2017.

Laina et al [31]: Iro Laina, Christian Rupprecht, Vasileios Belagiannis, Federico Tombari, and Nassir Navab. "Deeper depth prediction with fully convolutional residual networks". In 2016 Fourth International Conference on 3D Vision (3DV), 2016.

Fu et al [12]: Huan Fu, Mingming Gong, Chaohui Wang, Kayhan Batmanghelich, and Dacheng Tao. "Deep ordinal regression network for monocular depth estimation". In Proceedings of the IEEE/CVF Conference on Computer Vision and Pattern Recognition (CVPR), 2018.

Yin et al [74]: Wei Yin, Yifan Liu, Chunhua Shen, and Youliang Yan. "Enforcing geometric constraints of virtual normal for depth prediction." In Proceedings of the IEEE/CVF International Conference on Computer Vision (ICCV), 2019.

Huynh et al [22]: Lam Huynh, Phong Nguyen-Ha, Jiri Matas, Esa Rahtu, and Janne Heikkilä. "Guiding monocular depth estimation using depth-attention volume". In The European Conference on Computer Vision (ECCV), 2020.

Lee et al [32]: Jin Han Lee, Myung-Kyu Han, Dong Wook Ko, and Il Hong Suh. "From big to small: Multi-scale local planar guidance for monocular depth estimation". arXiv e-prints, abs/1907.10326, July 2019.

NYU Depth-v2 is the major indoor depth benchmark. It can be seen from Table 2 that, when all methods were tested and trained using the NYU Depth-v2 dataset, the depth estimation performance of the P3Depth embodiment of the invention evaluated in terms of the metric $\delta_3$ matched that of the best-performing of the other methods (Huynh et al [22]). On all of the other five standard metrics, the depth estimation performance of the P3Depth embodiment of the invention was better than that of any of the other examined methods, achieving a superior relative performance gain of 9.18% in RMSE and 3.7% in A.Rel, while also improving and $\delta_1$ by 1.1%. This improvement in performance indicates that without using ground-truth planes as supervision, P3Depth learns an implicit representation of the planes which can benefit the overall depth estimation capability of the network.

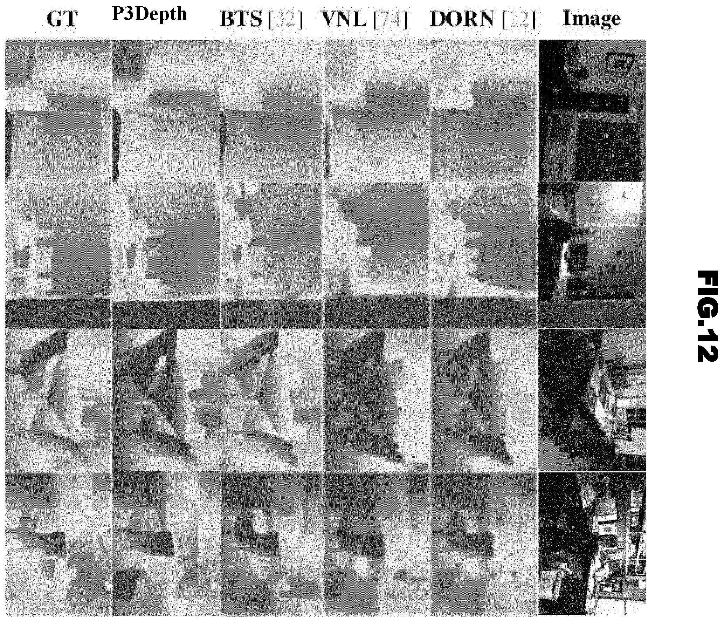

Qualitative results on NYU Depth-v2 support the above findings. Fig. 12 illustrates the high-quality depth predictions generated by the P3Depth embodiment of the invention in comparison with state-of-the-art methods using the same examples as in Yin et al, op. cit. The comparative examples show depth estimates generated by the DORN method (described by Fu et al, op. cit.), the VNL method (described by Yin et al, op. cit.), and the BTS method (described by Lee et al, op. cit.). The ground truth (GT) depth values are illustrated in the bottom row of images in Fig.12.

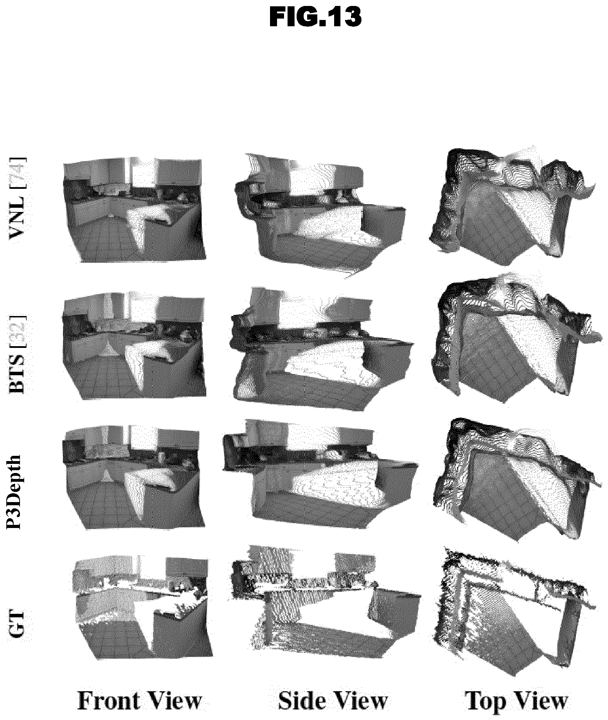

It can be clearly observed from Fig.12 that the surfaces which fit the piece-wise planar assumption used in the invention, such as a table, a cupboard, and even smaller objects, e.g., computer screens, photo frames etc. have consistent depth predictions with sharp details when the depth estimates are produced by the P3Depth embodiment of the invention as compared to the state-of-the-art methods. Overall, the P3Depth embodiment of the invention generates superior visual results. The P3Depth embodiment of the invention excels especially on man-made regular structures in the indoor scenes. What is more, the predicted depth maps produce 3D reconstructions (front view, side view and top view) which are consistent with ground-truth point clouds and preserve the structure of the scene better than competing methods, as illustrated in Fig. 13.

Study 2

Table 3 below summarizes the values of various depth estimation metrics that were generated in respect of depth estimations produced by the example embodiment of the invention and by various comparative examples, in experiments performed by training all the compared systems using the KITTI dataset. The comparison was performed on the Eigen split and on the Garg split as indicated in the table.

**TABLE 3**

| Method | A.Rel | S.Rel | RMSE | RMSE*log* | $\delta_1$ | $\delta_2$ | $\delta_3$ |
|---|---|---|---|---|---|---|---|
| | | *Lower values are better* | | | *Higher values are better* | | |
| Garg split. Cap: 50m | | | | | | | |
| Garg et al [15] | 0.169 | 1.080 | 5.104 | 0.273 | 0.740 | 0.904 | 0.962 |
| Godard et al [17] | 0.108 | 0.657 | 3.729 | 0.194 | 0.873 | 0.954 | 0.979 |
| Kuznietsov [28] | 0.108 | 0.595 | 3.518 | 0.179 | 0.875 | 0.964 | 0.988 |
| Gan et al [14] | 0.094 | 0.552 | 3.133 | 0.165 | 0.898 | 0.967 | 0.986 |
| Fu et al [12] | 0.071 | 0.268 | 2.271 | 0.116 | 0.936 | 0.985 | 0.995 |
| Lee et al [32] | 0.056 | 0.169 | 1.925 | 0.087 | 0.964 | 0.994 | 0.999 |
| **P3Depth Embodiment** | **0.055** | **0.130** | **1.651** | **0.081** | **0.974** | **0.997** | **0.999** |
| Eigen split. Cap: 80m | | | | | | | |
| Saxena et al [57] | 0.280 | 3.012 | 8.734 | 0.361 | 0.601 | 0.820 | 0.926 |
| Eigen et al [9] | 0.203 | 1.548 | 6.307 | 0.282 | 0.702 | 0.898 | 0.967 |
| Liu et al [42] | 0.201 | 1.584 | 6.471 | 0.273 | 0.680 | 0.898 | 0.967 |
| Godard et al [17] | 0.114 | 0.898 | 4.935 | 0.206 | 0.861 | 0.949 | 0.976 |
| Kuznietsov [28] | 0.113 | 0.741 | 4.621 | 0.189 | 0.862 | 0.960 | 0.986 |
| Gan et al [14] | 0.098 | 0.666 | 3.933 | 0.173 | 0.890 | 0.964 | 0.985 |
| Fu et al [12] | 0.072 | 0.307 | 2.727 | 0.120 | 0.932 | 0.984 | 0.994 |
| Yin et al [74] | 0.072 | - | 3.258 | 0.117 | 0.938 | 0.990 | 0.998 |
| Lee et al [32] | 0.059 | 0.245 | 2.756 | 0.096 | 0.956 | 0.993 | 0.998 |
| **P3Depth Embodiment** | **0.071** | **0.270** | **2.842** | **0.103** | **0.953** | **0.993** | **0.998** |

where the methods in the comparative examples are described in:

Garg et al [15]: Ravi Garg, Vijay Kumar B.G., Gustavo Carneiro, and Ian Reid. "Unsupervised CNN for single view depth estimation: Geometry to the rescue". In The European Conference on Computer Vision (ECCV), 2016.

Godard et al [17]: Clement Godard, Oisin Mac Aodha, and Gabriel J. Brostow. "Unsupervised monocular depth estimation with leftright consistency". In Proceedings of the IEEE Conference on Computer Vision and Pattern Recognition (CVPR), 2017.

Kuznietsov [28]: Yevhen Kuznietsov, Jorg Stuckler, and Bastian Leibe. "Semisupervised deep learning for monocular depth map prediction". In Proceedings of the IEEE Conference on Computer Vision and Pattern Recognition (CVPR), 2017.

Gan et al [14]: Yukang Gan, Xiangyu Xu, Wenxiu Sun, and Liang Lin. "Monocular depth estimation with affinity, vertical pooling, and label enhancement". In Proceedings of the European Conference on Computer Vision (ECCV), 2018.

Fu et al [12]: Huan Fu, Mingming Gong, Chaohui Wang, Kayhan Batmanghelich, and Dacheng Tao. "Deep ordinal regression network for monocular depth estimation". In Proceedings of the IEEE/CVF Conference on Computer Vision and Pattern Recognition (CVPR), 2018.

Lee et al [32]: Jin Han Lee, Myung-Kyu Han, Dong Wook Ko, and II Hong Suh. "From big to small: Multi-scale local planar guidance for monocular depth estimation". arXiv e-prints, abs/1907.10326, July 2019.

Saxena et al [57]: Ashutosh Saxena, Min Sun, and Andrew Y. Ng. "Make3D: Learning 3d scene structure from a single still image". IEEE Transactions on Pattern Analysis and Machine Intelligence, 31(5):824-840, 2009.

David Eigen, Christian Puhrsch, and Rob Fergus. "Depth map prediction from a single image using a multi-scale deep network". In Advances in Neural Information Processing Systems, 2014.

Liu et al [42]: Fayao Liu, Chunhua Shen, Guosheng Lin, and Ian Reid. "Learning depth from single monocular images using deep convolutional neural fields". IEEE Transactions on Pattern Analysis and Machine Intelligence, 38(10):2024-2039, 2016.

Godard et al [17]: Clement Godard, Oisin Mac Aodha, and Gabriel J. Brostow. "Unsupervised monocular depth estimation with leftright consistency". In Proceedings of the IEEE Conference on Computer Vision and Pattern Recognition (CVPR), 2017.

Kuznietsov [28]: Yevhen Kuznietsov, Jorg Stuckler, and Bastian Leibe. "Semisupervised deep learning for monocular depth map prediction". In Proceedings of the IEEE Conference on Computer Vision and Pattern Recognition (CVPR), 2017.

Gan et al [14]: Yukang Gan, Xiangyu Xu, Wenxiu Sun, and Liang Lin. "Monocular depth estimation with affinity, vertical pooling, and label enhancement". In Proceedings of the European Conference on Computer Vision (ECCV), 2018.

Fu et al [12]: Huan Fu, Mingming Gong, Chaohui Wang, Kayhan Batmanghelich, and Dacheng Tao. "Deep ordinal regression network for monocular depth estimation". In Proceedings of the IEEE/CVF Conference on Computer Vision and Pattern Recognition (CVPR), 2018.

Yin et al [74]: Wei Yin, Yifan Liu, Chunhua Shen, and Youliang Yan. "Enforcing geometric constraints of virtual normal for depth prediction." In Proceedings of the IEEE/CVF International Conference on Computer Vision (ICCV), 2019.

Lee et al [32]: Jin Han Lee, Myung-Kyu Han, Dong Wook Ko, and II Hong Suh. "From big to small: Multi-scale local planar guidance for monocular depth estimation". arXiv e-prints, abs/1907.10326, July 2019.

It can be seen from Table 3 that, when all methods were tested and trained using the KITTI dataset, considering the Garg split (with maximum range of 50m), the system/method according to the present embodiment outperformed all of the other methods, according to all of the metrics, by a significant margin. More specifically, RMSE was improved by 14.2% and $\delta_1$ by 1.0%. This demonstrates that the method according to the invention takes advantage of regular structures in outdoor scenes to improve depth predictions. The results on KITTI in Table 3 suggest that the new method is fully applicable to outdoor datasets.

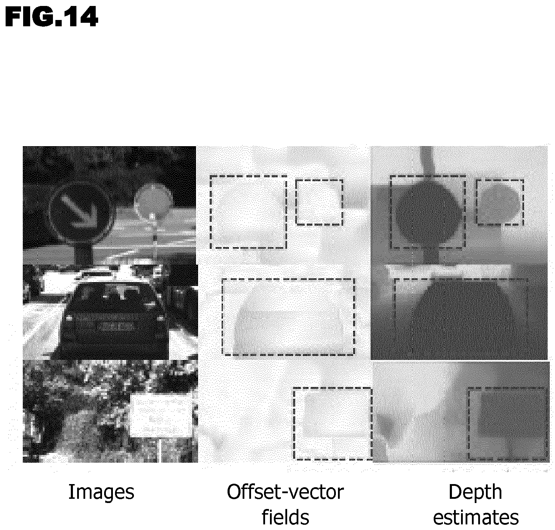

Moreover, considering the Eigen split, where the maximum range is set to 80m, the system/method according to the present embodiment is comparable to state of the art as it generally ranks second and it is outperformed only by the method according to Lee et al, op. cit. It is understandable that the ranking is slightly lower on the Eigen split as compared to the Garg split, given that distant parts of the scene get projected to smaller regions and thus the extent of the respective smooth pieces of the depth map is also smaller, making it more difficult to predict a correct offset. Overall, the method is able to handle planar objects well even in variable lighting conditions. The latter point is illustrated by Fig. 14.

Fig.14 illustrates three images from the KITTI dataset in which lighting conditions vary, along with the offset-vector fields and the depth estimates. generated for these images by the method/system according to the present embodiment. Although the sign board in the bottom image is brightly lit and the car in the middle image is badly lit, the method is able to detect the regularity of the object surface and predict consistent depth.

Study 3

As mentioned above, zero-shot testing was performed to see how well the invention performed in estimating depth for datasets which had not been used during the training phase. In this regard the P3Depth embodiment of the invention was compared to the VNL method (described by Yin et al, op. cit.) and the BTS method (described by Lee et al, op. cit.) and the results of the zero-shot testing are shown in Table 4 below. All of the methods were trained on the NYU Depth-v2 dataset and all were tested for the four datasets listed in Table 4 without fine tuning.

**TABLE 4**

| Dataset | Metric | Methods | | |
|---|---|---|---|---|
| | | VNL [74] | BTS [32] | P3Depth |
| ScanNet [7] | A.Rel $\downarrow$ | 0.227 | 0.255 | 0.223 |
| | RMSE $\downarrow$ | 0.563 | 0.615 | 0.538 |
| | $\delta_1 \uparrow$ | 0.544 | 0.472 | 0.551 |
| SUN-RGBD [61] | A.Rel $\downarrow$ | 0.317 | 0.317 | 0.307 |
| | RMSE $\downarrow$ | 0.449 | 0.461 | 0.431 |
| | $\delta_1 \uparrow$ | 0.793 | 0.794 | 0.797 |
| Diode Indoor | A.Rel $\downarrow$ | 0.291 | 0.310 | 0.373 |
| | RMSE $\downarrow$ | 0.890 | 0.981 | 0.784 |
| | $\delta_1 \uparrow$ | 0.635 | 0.559 | 0.639 |
| ETH-3D | A.Rel $\downarrow$ | 0.331 | 0.366 | 0.343 |
| | RMSE $\downarrow$ | 1.649 | 1.840 | 1.637 |
| | $\delta_1 \uparrow$ | 0.462 | 0.398 | 0.468 |

From Table 4 it can be seen that in a challenging zero-shot transfer setup, the P3Depth embodiment of the invention outperforms the prior state of the art methods on the ScanNet, SUN-RGBD, DIODE Indoor, and ETH-3D datasets. Table 4 demonstrates the generalization ability of the new method in a zero-shot setting where the test domains have not been seen during training. P3epth achieves the best performance of all the tested methods on the ScanNet and SUNRGBD indoor datasets in all metrics. On DIODE Indoor and ETH-3D, although one other method performs better in terms of A.Rel, P3Depth is far the best in terms of both RMSE and $\delta_1$. This comparison shows that even when the P3Depth embodiment of the invention is trained only on an indoor dataset such as NYU Depth-v2, it works well on a variety of datasets with different types of scenes.

Study 4

A thorough ablation study was conducted to assess the importance of the various components of the above-described method/system according to embodiments of the invention. The results of the ablation study are shown in Table 5, in which D indicates that the tested system predicted depth directly, C indicates that the tested system predicted plane coefficients, Ref. indicates that tested system used cascaded refinement of offsets, MPL indicates that the training of the tested system involved a loss function including mean plane loss as described above.

**Table 5**

| Predicted parameter | Guidance module used | Offset vectors used | Ref. | MPL | A.Rel ↓ | RMSE ↓ | $\delta_1$ ↑ |
|---|---|---|---|---|---|---|---|
| D | NO | NO | NO | NO | 0.142 | 0.458 | 0.821 |
| C | NO | NO | NO | NO | 0.144 | 0.487 | 0.811 |
| C | YES | NO | NO | NO | 0.142 | 0.458 | 0.824 |
| D | NO | YES | NO | NO | 0.140 | 0.453 | 0.824 |
| C | NO | YES | NO | NO | 0.116 | 0.390 | 0.877 |
| C | YES | YES | NO | NO | 0.115 | 0.384 | 0.879 |
| C | YES | YES* | NO | NO | 0.116 | 0.390 | 0.879 |
| D | NO | YES | YES | NO | 0.134 | 0.440 | 0.839 |
| C | NO | YES | YES | NO | 0.113 | 0.378 | 0.884 |
| C | YES | YES | YES | NO | 0.109 | 0.373 | 0.889 |
| C | YES | YES | YES | YES | 0.104 | 0.356 | 0.898 |

\* indicates that the offset length was restricted to $\tau=0.3$ instead of $\tau=0.1$

It can be seen from Table 5 that, in a standalone setting (i.e., if the pixel-based depth estimator 4 is used alone, without the seed-pixel-based depth estimator 6 and fusion unit 8), directly predicting depth is better than predicting planar coefficients. However, once the second head 6 is added, which predicts offset vectors, a substantial benefit is obtained by using the plane coefficient representation compared to directly predicting depth. This demonstrates that the overall network learns to make effective use of local planar information at seed pixels to improve depth, thanks to the plane coefficient representation. An additional small benefit may be obtained by adding a guidance module to the plane coefficient decoder. The ablation study also verifies the utility of cascaded refinement of offsets, which yields better results than simply using a higher maximum offset length. Finally, adding the mean plane loss into the loss function used during the training phase - on top of plane coefficients, offset vectors and cascaded offset refinement - yields results that exceed those of the state-of-the-art on the NYU Depth-v2 dataset.

The supervised method for monocular depth estimation according to embodiments of the present invention leverages local planar information in the 3D scene in order to predict consistent depth values across smooth parts of the scene. The method uses a plane coefficient representation for depth, which enables to share information from seed locations and improve the predicted depth. The method implicitly learns to predict the offsets to these seed locations and to weigh the depth obtained from them adaptively according to confidence. The method was empirically validated on the major indoor and outdoor benchmarks for monocular depth estimation and sets the new state of the art among supervised approaches.

Although the present invention has been described above with reference to certain specific embodiments, it will be understood that the invention is not limited by the particularities of the specific embodiments. Numerous variations, modifications and developments may be made in the specified embodiments within the scope of the appended claims.

**Claims**

1. A depth-estimation system (1) to estimate depth of three-dimensional points corresponding to pixels in an image representing a three-dimensional scene, the depth-estimation system comprising a trained neural network architecture including:

a pixel-based depth estimator (4) comprising a plane coefficient detector (42) configured to receive feature data of said image, to generate an intermediate output comprising plane coefficients of respective pixels in the image, and a first plane-coefficient-to-depth convertor (44) to generate a first depth estimate by converting the plane coefficients to depth values; and

in parallel to the pixel-based depth estimator (4), a seed-pixel-based depth estimator (6) comprising an offset-vector-field predictor (62) configured to receive feature data of said image and to generate an intermediate output comprising offset vectors between target pixels and seed pixels on planes in the three-dimensional scene represented by the image, and a plane coefficient resampler (64) to resample the plane coefficients produced by the plane coefficient detector (42) using the offset vector field, and a second plane-coefficient-to-depth convertor (64) to generate a second depth estimate by converting the resampled plane coefficients to depth values; wherein the depth estimation system further comprises a fusion unit (8) configured to receive, and to combine, the first and second depth estimates to produce a final depth estimate for output.

2. The depth-estimation system of claim 1, wherein:

the offset-vector-field detector (6) is configured to generate a confidence map indicative of a level of confidence that a seed pixel is in the same plane as a target pixel, and to supply the confidence map to the fusion unit (8); and the fusion unit (8) is configured to weight the first and second depth estimates based on confidence values in the confidence map generated by the offset vector field generator (6).

3. The depth-estimation system of claim 1 or 2, wherein:
the offset-vector-field detector (6) is configured to predict the offset **o(p) = q - p** between each pixel **p** and a seed pixel **q** on the same plane as pixel **p** in the scene.

4. The depth-estimation system of claim 3, wherein:
the offset-vector-field detector (6) is configured to cascade is configured to cascade the offset vectors multiple times before resampling the plane coefficients, wherein a single cascading step consists in sampling the position **p + o(p) + o(p + o(p)).**

5. The depth-estimation system of any previous claim, wherein the neural network architecture has been trained in a supervised end-to-end training process which minimizes a loss function $\mathcal{L}_{depth}$ defined according to the equation below:

$$\mathcal{L}_{depth} = \mathcal{L}\left(D_f, D^*\right) + \lambda\mathcal{L}(D_s, D^*) + \mu\,\mathcal{L}(D_i, D^*)$$

where $D_f$ is the final depth estimate produced by the fusion unit (8), $D^*$ is the ground truth depth, $D_s$ is the second depth estimate produced by the offset-vector-field detector (6), $D_i$ is the first depth estimate produced by the plane coefficient detector (4), $\mathcal{L}(D_f, D^*)$ is a loss function that penalizes deviations between the final depth estimate produced by the fusion unit (8) and the ground truth, $\mathcal{L}(D_s, D^*)$ is a loss function that penalizes deviations between the second depth estimate produced by the offset-vector-field detector (6) and the ground truth, $\mathcal{L}(D_i, D^*)$ is a loss function that penalizes deviations between the first depth estimate produced by the plane coefficient detector (4) and the ground truth, and $\lambda$ and $\mu$ are hyperparameters.

6. The depth-estimation system of claim 5, wherein the supervised end-to-end training process seeks to minimize a total loss function $\mathcal{L}_{total}$ which includes a mean patch loss $\mathcal{L}_{MPL}$ additional to $\mathcal{L}_{depth}$ where the mean patch loss $\mathcal{L}_{MPL}$ is defined according to the equation below:

$$\mathcal{L}_{MPL} = \sum_{k=1}^{K} \|n_k - n_k^*\|_1$$

where K are all the non-overlapping patches in $D$ and $D^*$, and $n_k$ is the normal to a given patch k.

7. The depth-estimation system of any previous claim, wherein the plane coefficient detector (42) comprises a plane coefficient guidance module.

8. A method of training a depth-estimation system according to any one of claims 1 to 7, the method comprising:

training the neural network architecture to minimize a loss function $\mathcal{L}_{depth}$ defined according to the equation below:

$$\mathcal{L}_{depth} = \mathcal{L}\left(D_f, D^*\right) + \lambda\mathcal{L}(D_s, D^*) + \mu\,\mathcal{L}(D_i, D^*)$$

where $D_f$ is the final depth estimate produced by the fusion unit (8) for an image input to the neural network architecture of the depth-estimation system, D* is the ground truth depth for said image, $D_s$ is the second depth estimate produced by the offset-vector-field detector (6) for said image, $D_i$ is the first depth estimate produced by the plane coefficient detector (4) for said image, $\mathcal{L}(D_f, D^*)$ is a loss function that penalizes deviations between the final depth estimate produced by the fusion unit (8) and the ground truth, $\mathcal{L}(D_s, D^*)$ is a loss function that penalizes deviations between the second depth estimate produced by the offset-vector-field detector (6) and the ground truth, $\mathcal{L}(D_i, D^*)$ is a loss function that penalizes deviations between the first depth estimate produced by the plane coefficient detector (4) and the ground truth, and λ and μ are hyperparameters.

9. A training method according to claim 8, wherein the training seeks to minimize a total loss function $\mathcal{L}_{total}$ which includes a mean patch loss $\mathcal{L}_{MPL}$ additional to $\mathcal{L}_{depth}$ where the mean patch loss $\mathcal{L}_{MPL}$ is defined according to the equation below:

$$\mathcal{L}_{MPL} = \sum_{k=1}^{K} \|n_k - n_k^*\|_1$$

where K are all the non-overlapping patches in D and D*, and $n_k$ is the normal to a given patch k.

10. A computer-implemented method of estimating depth of three-dimensional points corresponding to pixels in an image representing a three-dimensional scene, the method being carried out by a depth-estimation system according to any one of claims 1 to 7 and comprising:

   processing feature data of said image in first and second parallel paths;
   in the first parallel path:

   - generating an intermediate output comprising plane coefficients of respective pixels in the image, and
   - generating a first depth estimate by converting the plane coefficients to depth values;

   in the second parallel path:

   - generating an intermediate output comprising predicted offset vectors between target pixels and seed pixels on planes in the three-dimensional scene represented by the image,
   - using the predicted offset vectors to resample the plane coefficients produced in the first parallel path, and
   - generating a second depth estimate by converting the resampled plane coefficients to depth values; and

   combining the first and second depth estimates to produce a final depth estimate for output.

11. The computer-implemented depth-estimation method of claim 10, further comprising in the second parallel path, generating a confidence map indicative of a level of confidence that a seed pixel is in the same plane as a target pixel, wherein the combining weights the first and second depth estimates based on confidence values in the confidence map.

12. The computer-implemented depth-estimation method of claim 10, wherein the generating of the offset vectors predicts the offset $\mathbf{o(p)} = \mathbf{q} - \mathbf{p}$ between each pixel $\mathbf{p}$ and a seed pixel $\mathbf{q}$ on the same plane as pixel $\mathbf{p}$ in the scene.

13. The computer-implemented depth-estimation method of claim 12, wherein the generating of the offset vectors cascades the offset vectors multiple times before the plane coefficients are resampled, wherein a single cascading step consists in sampling the position $\mathbf{p + o(p) + o(p + o(p))}$.

## Patentansprüche

1. Tiefenschätzungssystem (1) zum Schätzen einer Tiefe von dreidimensionalen Punkten, die Pixeln in einem Bild entsprechen, das eine dreidimensionale Szene darstellt, das Tiefenschätzungssystem umfassend eine trainierte neuronale Netzarchitektur, die Folgendes beinhaltet:

einen pixelbasierten Tiefenschätzer (4), umfassend einen Ebenenkoeffizient-Detektor (42), der konfiguriert ist, um Merkmalsdaten des Bilds zu empfangen, um eine Zwischenausgabe umfassend Ebenenkoeffizienten jeweiliger Pixel in dem Bild zu erzeugen, und einen ersten Ebenenkoeffizient-Tiefenwandler (44), um durch Umwandeln der Ebenenkoeffizienten in Tiefenwerte eine erste Tiefenschätzung zu erzeugen; und

parallel zu dem pixelbasierten Tiefenschätzer (4) einen auf Startpixeln basierenden Tiefenschätzer (6), umfassend einen Offset-Vektorfeld-Prädiktor (62) umfasst, der konfiguriert ist, um Merkmalsdaten des Bilds zu empfangen und eine Zwischenausgabe zu erzeugen, umfassend Offset-Vektoren zwischen Zielpixeln und Startpixeln auf Ebenen in der durch das Bild dargestellten dreidimensionalen Szene, und einen Ebenenkoeffizient-Resampler (64), um die von dem Ebenenkoeffizient-Detektor (42) erzeugten Ebenenkoeffizienten unter Verwendung des Offset-Vektorfelds neu abzutasten, und einen zweiten Ebenenkoeffizient-Tiefenwandler (64), um eine zweite Tiefenschätzung durch Umwandeln der neu abgetasteten Ebenenkoeffizienten in Tiefenwerte zu erzeugen;

wobei das Tiefenschätzungssystem ferner eine Fusionseinheit (8) umfasst, die konfiguriert ist, um die erste und die zweite Tiefenschätzung zu empfangen und zu kombinieren, um eine endgültige Tiefenschätzung zur Ausgabe zu erzeugen.

2. Tiefenschätzungssystem nach Anspruch 1, wobei:

der Offset-Vektor-Feld-Detektor (6) konfiguriert ist, um eine Konfidenzkarte zu erzeugen, die indikativ für einen Konfidenzgrad ist, dass ein Startpixel in der gleichen Ebene wie ein Zielpixel ist, und die Konfidenzkarte an die Fusionseinheit (8) zuzuführen; und

die Fusionseinheit (8) konfiguriert ist, um die erste und die zweite Tiefenschätzung basierend auf Konfidenzwerten in der von dem Offset-Vektorfeldgenerator (6) erzeugten Konfidenzkarte zu gewichten.

3. Tiefenschätzungssystem nach Anspruch 1 oder 2, wobei:
der Offset-Vektor-Feld-Detektor (6) konfiguriert ist, um den Offset **o(p) = q - p** zwischen jedem Pixel **p** und einem Startpixel **q** auf derselben Ebene wie Pixel **p** in der Szene vorherzusagen.

4. Tiefenschätzungssystem nach Anspruch 3, wobei:
der Offset-Vektor-Feld-Detektor (6) konfiguriert ist, um die Offset-Vektoren mehrfach zu kaskadieren, bevor er die Ebenenkoeffizienten erneut abtastet, wobei ein einzelner Kaskadierungsschritt darin besteht, die Position **p + o(p) + o(p + o(p))** abzutasten.

5. Tiefenschätzungssystem nach einem der vorherigen Ansprüche, wobei die Architektur des neuronalen Netzes in einem überwachten Ende-zu-Ende-Trainingsprozess trainiert wurde, der eine Verlustfunktion $\mathcal{L}_{Tiefe}$ minimiert, die gemäß der nachstehenden Gleichung definiert ist:

$$\mathcal{L}_{Tiefe} = \mathcal{L}(D_f, D^*) + \lambda \mathcal{L}(D_s, D^*) + \mu \mathcal{L}(D_i, D^*)$$

wobei $D_f$ die von der Fusionseinheit (8) erzeugte endgültige Tiefenschätzung ist, $D^*$ die tatsächliche Tiefe ist, $D_s$ die zweite Tiefenschätzung ist, die durch den Offset-Vektor-Feld-Detektor (6) erzeugt wird, $D_i$ die erste Tiefenschätzung ist, die durch den Ebenenkoeffizient-Detektor (4) erzeugt wird, $\mathcal{L}(D_f, D^*)$ eine Verlustfunktion ist, die Abweichungen zwischen der von der Fusionseinheit (8) erzeugten endgültigen Tiefenschätzung und der tatsächlichen Tiefe bestraft, $\mathcal{L}(D_s, D^*)$ eine Verlustfunktion ist, die Abweichungen zwischen der zweiten Tiefenschätzung, die durch den Offset-Vektor-Feld-Detektor (6) erzeugt wird, und der tatsächlichen Tiefe bestraft, $\mathcal{L}(D_i, D^*)$ eine Verlustfunktion ist, die Abweichungen zwischen der ersten Tiefenschätzung, die durch den Ebenenkoeffizient-Detektor (4) erzeugt wird, und der tatsächlichen Tiefe bestraft, und $\lambda$ und $\mu$ Hyperparameter sind.

6. Tiefenschätzungssystem nach Anspruch 5, wobei der überwachte Ende-zu-Ende-Trainingsprozess danach strebt, eine Gesamtverlustfunktion $\mathcal{L}_{gesamt}$ zu minimieren, die einen mittleren Blockverlust $\mathcal{L}_{MPL}$ zusätzlich zu $\mathcal{L}_{Tiefe}$ beinhaltet, wobei der mittlere Blockverlust $\mathcal{L}_{MPL}$ gemäß der nachstehenden Gleichung definiert ist:

$$\mathcal{L}_{MPL} = \sum_{k=1}^{K} \|n_k - n_k^*\|_1$$

wobei K alle nicht überlappenden Flächen in $D$ und D* sind und $n_k$ die Senkrechte zu einer bestimmten Block k ist.

7. Tiefenschätzungssystem nach einem der vorherigen Ansprüche, wobei der Ebenenkoeffizient-Detektor (42) ein Ebenenkoeffizient-Führungsmodul umfasst.

8. Verfahren zum Trainieren eines Tiefenschätzungssystems nach einem der Ansprüche 1 bis 7, das Verfahren umfassend:

Trainieren der Architektur des neuronalen Netzes, um eine Verlustfunktion $\mathcal{L}_{Tiefe}$ zu minimieren, die gemäß der nachstehen den Gleichung definiert ist:

$$\mathcal{L}_{Tiefe} = \mathcal{L}(D_f, D^*) + \lambda\mathcal{L}(D_s, D^*) + \mu\mathcal{L}(D_i, D^*)$$

wobei $D_f$ die endgültige Tiefenschätzung ist, die von der Fusionseinheit (8) für ein Bild erzeugt wird, das in die neuronale Netzarchitektur des Tiefenschätzungssystems eingegeben wird, D* die tatsächliche Tiefe für das Bild ist, $D_s$ die zweite Tiefenschätzung ist, die durch den Offset-Vektor-Feld-Detektor (6) für das Bild erzeugt wird, $D_i$ die erste Tiefenschätzung ist, die durch den Ebenenkoeffizient-Detektor (4) für das Bild erzeugt wird, $\mathcal{L}(D_f, D^*)$ eine Verlustfunktion ist, die Abweichungen zwischen der von der Fusionseinheit (8) erzeugten endgültigen Tiefenschätzung und der tatsächlichen Tiefe bestraft, $\mathcal{L}(D_s, D^*)$ eine Verlustfunktion ist, die Abweichungen zwischen der zweiten Tiefenschätzung, die durch den Offset-Vektor-Feld-Detektor (6) erzeugt wird, und der tatsächlichen Tiefe bestraft, $\mathcal{L}(D_i, D^*)$ eine Verlustfunktion ist, die Abweichungen zwischen der ersten Tiefenschätzung, die durch den Ebenenkoeffizient-Detektor (4) erzeugt wird, und der tatsächlichen Tiefe bestraft, und $\lambda$ und $\mu$ Hyperparameter sind.

9. Trainingsverfahren nach Anspruch 8, wobei das Training danach strebt, eine Gesamtverlustfunktion $\mathcal{L}_{gesamt}$ zu minimieren, die einen mittleren Blockverlust $\mathcal{L}_{MPL}$ zusätzlich zu $\mathcal{L}_{Tiefe}$ beinhaltet, wobei der mittlere Blockverlust $\mathcal{L}_{MPL}$ gemäß der nachstehenden Gleichung definiert ist:

$$\mathcal{L}_{MPL} = \sum_{k=1}^{K} \|n_k - n_k^*\|_1$$

wobei K alle nicht überlappenden Flächen in $D$ und D* sind und $n_k$ die Senkrechte zu einer bestimmten Fläche k ist.

10. Computerimplementiertes Verfahren zum Schätzen der Tiefe von dreidimensionalen Punkten, die Pixeln in einem Bild entsprechen, das eine dreidimensionale Szene darstellt, wobei das Verfahren von einem Tiefenschätzungssystem nach einem der Ansprüche 1 bis 7 ausgeführt wird und Folgendes umfasst:

Verarbeiten von Merkmalsdaten des Bilds in einem ersten und einem zweiten parallelen Pfad;
in dem ersten parallelen Pfad:

    - Erzeugen einer Zwischenausgabe, umfassend Ebenenkoeffizienten der jeweiligen Pixel in dem Bild, und
    - Erzeugen einer ersten Tiefenschätzung durch Umwandeln der Ebenenkoeffizienten in Tiefenwerte;

in dem zweiten parallelen Weg:

    - Erzeugen einer Zwischenausgabe, umfassend vorhergesagte Versatzvektoren zwischen Zielpixeln und Startpixeln auf Ebenen in der durch das Bild dargestellten dreidimensionalen Szene,
    - Verwenden der vorhergesagten Offset-Vektoren zum Neuabtasten der Ebenenkoeffizienten, die auf dem ersten parallelen Pfad erzeugt werden, und

- Erzeugen einer zweiten Tiefenschätzung durch Umwandeln der neu abgetasteten Ebenenkoeffizienten in Tiefenwerte; und

Kombinieren der ersten und der zweiten Tiefenschätzung, um eine endgültige Tiefenschätzung zur Ausgabe zu erzeugen.

11. Computerimplementiertes Tiefenschätzungsverfahren nach Anspruch 10, ferner umfassen in dem zweiten parallelen Pfad ein Erzeugen einer Konfidenzkarte, die indikativ für einen Konfidenzgrad ist, dass ein Startpixel in derselben Ebene wie ein Zielpixel ist, wobei das Kombinieren die erste und die zweite Tiefenschätzung basierend auf Konfidenzwerten in der Konfidenzkarte gewichtet.

12. Computerimplementiertes Tiefenschätzungsverfahren nach Anspruch 10, wobei das Erzeugen der Offset-Vektoren den Offset **o(p) = q - p** zwischen jedem Pixel **p** und einem Startpixel **q** auf derselben Ebene wie Pixel **p** in der Szene vorhersagt.

13. Computerimplementiertes Tiefenschätzungsverfahren nach Anspruch 12, wobei das Erzeugen der Offset-Vektoren die Offset-Vektoren mehrfach kaskadiert, bevor die Ebenenkoeffizienten neu abgetastet werden, wobei ein einzelner Kaskadierungsschritt in einem Abtasten der Position **p + o(p) + o(p + o(p))** besteht.

## Revendications

1. Système d'estimation de profondeur (1) pour estimer la profondeur de points tridimensionnels correspondant à des pixels (ou éléments d'image) dans une image représentant une scène tridimensionnelle, le système d'estimation de profondeur comprenant une architecture de réseau neuronal entraîné comprenant :

   un estimateur de profondeur basé sur des pixels (4) comprenant un détecteur de coefficient de plan (42) configuré pour recevoir des données caractéristiques de ladite image, pour générer un résultat intermédiaire comprenant des coefficients de plan de pixels respectifs dans l'image, et un premier convertisseur coefficient de plan-profondeur (44) pour générer une première estimation de profondeur en convertissant les coefficients de plan en valeurs de profondeur ; et
   en parallèle à l'estimateur de profondeur basé sur les pixels (4), un estimateur de profondeur basé sur les pixels de base (6) comprenant un prédicteur de champ de vecteur de décalage (62) configuré pour recevoir des données caractéristiques de ladite image et pour générer un résultat intermédiaire comprenant des vecteurs de décalage entre des pixels cibles et des pixels de base sur des plans dans la scène tridimensionnelle représentée par l'image, et un rééchantillonneur de coefficient de plan (64) pour rééchantillonner les coefficients de plan produits par le détecteur de coefficient de plan (42) en utilisant le champ de vecteur de décalage, et un deuxième convertisseur coefficient de plan-profondeur (64) pour générer une deuxième estimation de profondeur en convertissant les coefficients de plan rééchantillonnés en valeurs de profondeur ;
   le système d'estimation de profondeur comprenant en outre une unité de fusion (8) configurée pour recevoir, et pour combiner, les première et deuxième estimations de profondeur pour produire une estimation de profondeur finale pour la sortie.

2. Système d'estimation de profondeur selon la revendication 1, dans lequel :

   le détecteur de champ de vecteur de décalage (6) est configuré pour générer une carte de confiance indicative d'un niveau de confiance qu'un pixel de base est dans le même plan qu'un pixel cible, et pour délivrer la carte de confiance à l'unité de fusion (8) ; et
   l'unité de fusion (8) est configurée pour pondérer les première et deuxième estimations de profondeur sur la base de valeurs de confiance dans la carte de confiance générée par le générateur de champ de vecteur de décalage (6).

3. Système d'estimation de profondeur selon la revendication 1 ou 2, dans lequel :
   le détecteur de champ de vecteur de décalage (6) est configuré pour prédire le décalage **o(p) = q - p** entre chaque pixel **p** et un pixel de base **q** dans le même plan que le pixel **p** dans la scène.

4. Système d'estimation de profondeur selon la revendication 3, dans lequel :
   le détecteur de champ de vecteur de décalage (6) est configuré pour mettre en cascade les vecteurs de décalage de multiples fois avant de rééchantillonner les coefficients de plan, une seule étape de mise en cascade consistant en un échantillonnage de la position **p + o(p) + o(p + o(p)).**

5. Système d'estimation de profondeur selon l'une quelconque des revendications précédentes, dans lequel l'architecture de réseau neuronal a été entraînée dans un processus d'entraînement supervisé de bout en bout qui minimise une fonction de perte $\mathcal{L}_{depth}$ définie selon l'équation ci-dessous :

$$\mathcal{L}_{depth} = \mathcal{L}\left(D_f, D^*\right) + \lambda\mathcal{L}(D_s, D^*) + \mu\,\mathcal{L}(D_i, D^*)$$

où $D_f$ est l'estimation de profondeur finale produite par l'unité de fusion (8), $D^*$ est la profondeur de vérité terrain, $D_s$ est la deuxième estimation de profondeur produite par le détecteur de champ de vecteur de décalage (6), $D_i$ est la première estimation de profondeur produite par le détecteur de coefficient de plan (4), $\mathcal{L}(D_f, D^*)$ est une fonction de perte qui pénalise des écarts entre l'estimation de profondeur finale produite par l'unité de fusion (8) et la vérité terrain, $\mathcal{L}(D_s, D^*)$ est une fonction de perte qui pénalise des écarts entre la deuxième estimation de profondeur produite par le détecteur de champ de vecteur de décalage (6) et la vérité terrain, $\mathcal{L}(D_i, D^*)$ est une fonction de perte qui pénalise des écarts entre la première estimation de profondeur produite par le détecteur de coefficient de plan (4) et la vérité terrain, et $\lambda$ et $\mu$ sont des hyperparamètres.

6. Système d'estimation de profondeur selon la revendication 5, dans lequel le processus d'entraînement supervisé de bout en bout cherche à minimiser une fonction de perte totale $\mathcal{L}_{total}$ qui inclut une perte de patch (ou bloc) moyenne $\mathcal{L}_{MPL}$ en plus de $\mathcal{L}_{depth}$ où la perte de patch moyenne $\mathcal{L}_{MPL}$ est définie selon l'équation ci-dessous :

$$\mathcal{L}_{MPL} = \sum_{k=1}^{K} \|n_k - n_k^*\|_1$$

où K sont tous les blocs sans chevauchement dans $D$ et $D^*$, et $n_k$ est la normale à un patch donné K.

7. Système d'estimation de profondeur selon l'une quelconque des revendications précédentes, dans lequel le détecteur de coefficient de plan (42) comprend un module de guidage de coefficient de plan.

8. Procédé d'entraînement d'un système d'estimation de profondeur selon l'une quelconque des revendications 1 à 7, le procédé comprenant :

l'entraînement de l'architecture de réseau neuronal pour minimiser une fonction de perte $\mathcal{L}_{depth}$ définie selon l'équation ci-dessous :

$$\mathcal{L}_{depth} = \mathcal{L}\left(D_f, D^*\right) + \lambda\mathcal{L}(D_s, D^*) + \mu\,\mathcal{L}(D_i, D^*)$$

où $D_f$ est l'estimation de profondeur finale produite par l'unité de fusion (8) pour une image entrée dans l'architecture de réseau neuronal du système d'estimation de profondeur, $D^*$ est la profondeur de vérité terrain pour ladite image, $D_s$ est la deuxième estimation de profondeur produite par le détecteur de champ de vecteur de décalage (6) pour ladite image, $D_i$ est la première estimation de profondeur produite par le détecteur de coefficient de plan (4) pour ladite image, $\mathcal{L}(D_f, D^*)$ est une fonction de perte qui pénalise des écarts entre l'estimation de profondeur finale produite par l'unité de fusion (8) et la vérité terrain, $\mathcal{L}(D_s, D^*)$ est une fonction de perte qui pénalise des écarts entre la deuxième estimation de profondeur produite par le détecteur de champ de vecteur de décalage (6) et la vérité terrain, $\mathcal{L}(D_i, D^*)$ est une fonction de perte qui pénalise des écarts entre la première estimation de profondeur produite par le détecteur de coefficient de plan (4) et la vérité terrain, et $\lambda$ et $\mu$ sont des hyperparamètres.

9. Procédé d'entraînement selon la revendication 8, selon lequel l'entraînement cherche à minimiser une fonction de

perte totale $\mathcal{L}_{total}$ qui inclut une perte de patch moyenne $\mathcal{L}_{MPL}$ en plus de $\mathcal{L}_{depth}$ où la perte de patch moyenne $\mathcal{L}_{MPL}$ est définie selon l'équation ci-dessous :

$$\mathcal{L}_{MPL} = \sum_{k=1}^{K} \|n_k - n_k^*\|_1$$

où K sont tous les blocs sans chevauchement dans D et $D^*$, et $n_k$ est la normale à un bloc donné K.

10. Procédé mis en œuvre par ordinateur d'estimation de la profondeur de points tridimensionnels correspondant à des pixels dans une image représentant une scène tridimensionnelle, le procédé étant mis en œuvre par un système d'estimation de profondeur selon l'une quelconque des revendications 1 à 7 et comprenant :

le traitement des données de caractéristique de ladite image dans des premier et deuxième chemins parallèles ;
dans le premier chemin parallèle :

- génération d'un résultat intermédiaire comprenant des coefficients de plan de pixels respectifs de l'image, et
- génération d'une première estimation de profondeur en convertissant les coefficients de plan en valeurs de profondeur ;

dans le deuxième chemin parallèle :

- génération d'un résultat intermédiaire comprenant des vecteurs de décalage prédits entre des pixels cible et des pixels de base dans des plans dans la scène tridimensionnelle représentée par l'image,
- utilisation des vecteurs de décalage prédits pour rééchantillonner les coefficients de plan produits dans le premier chemin parallèle, et
- génération d'une deuxième estimation de profondeur en convertissant les coefficients de plan rééchantillonnés en valeurs de profondeur ; et

combinaison des première et deuxième estimations de profondeur pour produire une estimation de profondeur finale pour la sortie.

11. Procédé d'estimation de profondeur mis en œuvre par ordinateur selon la revendication 10, comprenant en outre, dans le deuxième chemin parallèle, la génération d'une carte de confiance indicative d'un niveau de confiance dans le fait qu'un pixel de base est dans le même plan qu'un pixel cible, la combinaison pondérant les première et deuxième estimations de profondeur sur la base de valeurs de confiance dans la carte de confiance.

12. Procédé d'estimation de profondeur mis en œuvre par ordinateur selon la revendication 10, selon lequel la génération des vecteurs de décalage prédit le décalage **o(p) = q - p** entre chaque pixel **p** et un pixel de base **q** dans le même plan que le pixel **p** dans la scène.

13. Procédé d'estimation de profondeur mis en œuvre par ordinateur selon la revendication 12, selon lequel la génération des vecteurs de décalage met en cascade les vecteurs de décalage de multiples fois avant que les coefficients de plan soient rééchantillonnés, une étape de cascade unique consistant en un échantillonnage de la position **p + o(p) + o(p + o(p))**.

**FIG.1**

**FIG.2**

**FIG.3**

**FIG.4**

GROUND TRUTH PLANES

PREDICTED OFFSET VECTOR FIELD

color coding for the vector field

# FIG.5

Image

Intermediate Representations

Depth

backproject

3D Reconstruction

# FIG.6

## FIG.7

From 25

RES CONV
140

To 100
or 110

2x Up
154

RES CONV
140

150

+

From 90
or 100

100

## FIG.8

ELU → 3x3 CONV → ELU → 3x3 CONV

+

140

## FIG.9

3x3 CONV → 3x3 CONV → 2x up

110

# FIG.10

# FIG.11

EP 4 239 579 B1

# FIG.12

# FIG.13

# FIG.14

Images                Offset-vector              Depth
                         fields                  estimates

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **NATHAN SILBERMAN et al.** Indoor segmentation and support inference from rgbd images. *European Conference on Computer Vision*, 2012
- **KE XIAN** ; **CHUNHUA SHEN** ; **ZHIGUO CAO** ; **HAO LU** ; **YANG XIAO** ; **RUIBO LI** ; **ZHENBO LUO**. Monocular relative depth perception with web stereo data supervision. *Proceedings of the IEEE Conference on Computer Vision and Pattern Recognition (CVPR)*, June 2018
- **KAIMING HE et al.** Deep residual learning for image recognition.. *Proceedings of the IEEE conference on computer vision and pattern recognition*, 2016
- **ALEX KRIZHEVSKY et al.** Imagenet classification with deep convolutional neural networks. *Advances in neural information processing systems*, 2012
- Adam: a method for stochastic optimization. **DIEDERIK P. KINGMA et al.** International Conference on Learning Representations, ICLR,2015
- **JIN HAN LEE**. *From big to small: Multi-scale local planar guidance for monocular depth estimation*
- **DAVID EIGEN et al.** Depth map prediction from a single image using a multi-scale deep network. *Advances in Neural Information Processing Systems*, 2014
- **NATHAN SILBERMAN**. *Indoor segmentation and support inference from rgbd images*
- **ANDREAS GEIGER et al.** Vision meet robotics: The Kitti dataset.. *The International Journal of Robotics Research*, 2013, vol. 32 (11), 1231-1237
- **ANGELA DAI et al.** Scannet: Richly-annotated 3d reconstructions of indoor scenes. *Proc. Computer Vision and Pattern Recognition (CVPR)*, 2018
- **SHURAN SONG et al.** SUN RGB-D: An RGB-D scene understanding benchmark suite. *2015 IEEE Conference on Computer Vision and Pattern Recognition (CVPR)*, 2015
- **IGOR VASILJEVIC et al.** DIODE: A Dense Indoor and Outdoor Depth Dataset. *arXiv e-prints, abs/1908.00463*, 2019
- **THOMAS SCHÖPS et al.** A Multiview stereo benchmark with high-resolution images and multi-camera videos. *2017 IEEE Conference on Computer Vision and Pattern Recognition (CVPR)*, 2017
- **GARG et al.** Unsupervised CNN for single view depth estimation: Geometry to the rescue. *European Conference on Computer Vision (ECCV)*, 2016

- **CHEN LIU** ; **JIMEI YANG** ; **DUYGU CEYLAN** ; **ERSIN YUMER** ; **YASUTAKA FURUKAWA**. PlaneNet: Piece-wise planar reconstruction from a single RGB image. *Proceedings of the IEEE Conference on Computer Vision and Pattern Recognition (CVPR)*, 2018
- **CHEN LIU** ; **KIHWAN KIM** ; **JINWEI GU** ; **YASUTAKA FURUKAWA** ; **JAN KAUTZ**. PlaneRCNN: 3d plane detection and reconstruction from a single image. *Proceedings of the IEEE/CVF Conference on Computer Vision and Pattern Recognition (CVPR)*, 2019
- **ZEHAO YU** ; **JIA ZHENG** ; **DONGZE LIAN** ; **ZIHAN ZHOU** ; **SHENGHUA GAO**. Single-image piece-wise planar 3d reconstruction via associative embedding. *Proceedings of the IEEE/CVF Conference on Computer Vision and Pattern Recognition (CVPR)*, 2019
- **ZEHAO YU** ; **LEI JIN** ; **SHENGHUA GAO**. P2Net: Patch-match and plane-regularization for unsupervised indoor depth estimation. *The European Conference on Computer Vision (ECCV)*, 2020
- **ZHENPEI YANG** ; **LI ERRAN LI** ; **QIXING HUANG**. Strumononet: Structure-aware monocular 3d prediction. *Proceedings of the IEEE/CVF Conference on Computer Vision and Pattern Recognition (CVPR)*, 2021
- **ASHUTOSH SAXENA** ; **MIN SUN** ; **ANDREW Y. NG**. Make3D: Learning 3d scene structure from a single still image. *IEEE Transactions on Pattern Analysis and Machine Intelligence*, 2009, vol. 31 (5), 824-840
- **KEVIN KARSCH** ; **CE LIU** ; **SING BING KANG**. Depth transfer: Depth extraction from video using non-parametric sampling. *IEEE transactions on pattern analysis and machine intelligence*, 2014, vol. 36 (11), 2144-2158
- **MIAOMIAO LIU** ; **MATHIEU SALZMANN** ; **XUMING HE**. Discrete-continuous depth estimation from a single image.. *Proceedings of the IEEE/CVF Conference on Computer Vision and Pattern Recognition (CVPR)*, 2014
- **LUBOR LADICKY** ; **JIANBO SHI** ; **MARC POLLEFEYS**. Pulling things out of perspective. *Proceedings of the IEEE/CVF Conference on Computer Vision and Pattern Recognition (CVPR)*, 2014

- **BO LI** ; **CHUNHUA SHEN** ; **YUCHAO DAI** ; **ANTON VAN DEN HENGEL** ; **MINGYI HE**. Depth and surface normal estimation from monocular images using regression on deep features and hierarchical crfs. *Proceedings of the IEEE/CVF Conference on Computer Vision and Pattern Recognition (CVPR)*, 2015
- **PENG WANG** ; **XIAOHUI SHEN** ; **ZHE LIN** ; **SCOTT COHEN** ; **BRIAN PRICE** ; **ALAN L YUILLE**. Towards unified depth and semantic prediction from a single image. *Proceedings of the IEEE/CVF Conference on Computer Vision and Pattern Recognition (CVPR)*, 2015
- **FAYAO LIU** ; **CHUNHUA SHEN** ; **GUOSHENG LIN** ; **IAN REID**. Learning depth from single monocular images using deep convolutional neural fields. *IEEE Transactions on Pattern Analysis and Machine Intelligence*, 2016, vol. 38 (10), 2024-2039
- **ANIRBAN ROY** ; **SINISA TODOROVIC**. Monocular depth estimation using neural regression forest. *Proceedings of the IEEE/CVF Conference on Computer Vision and Pattern Recognition (CVPR)*, 2016, 7
- **DAVID EIGEN** ; **CHRISTIAN PUHRSCH** ; **ROB FERGUS**. Depth map prediction from a single image using a multi-scale deep network. *Advances in Neural Information Processing Systems*, 2014
- **AYAN CHAKRABARTI** ; **JINGYU SHAO** ; **GREGORY SHAKHNAROVICH**. Depth from a single image by harmonizing overcomplete local network predictions. *NIPS*, 2016
- **JUN LI** ; **REINHARD KLEIN** ; **ANGELA YAO**. A two-streamed network for estimating fine-scaled depth maps from single rgb images. *Proceedings of the IEEE International Conference on Computer Vision*, 2017
- **IRO LAINA** ; **CHRISTIAN RUPPRECHT** ; **VASILEIOS BELAGIANNIS** ; **FEDERICO TOMBARI** ; **NASSIR NAVAB**. Deeper depth prediction with fully convolutional residual networks. *2016 Fourth International Conference on 3D Vision (3DV)*, 2016
- **HUAN FU** ; **MINGMING GONG** ; **CHAOHUI WANG** ; **KAYHAN BATMANGHELICH** ; **DACHENG TAO**. Deep ordinal regression network for monocular depth estimation. *Proceedings of the IEEE/CVF Conference on Computer Vision and Pattern Recognition (CVPR)*, 2018
- **WEI YIN** ; **YIFAN LIU** ; **CHUNHUA SHEN** ; **YOULIANG YAN**. Enforcing geometric constraints of virtual normal for depth prediction.. *Proceedings of the IEEE/CVF International Conference on Computer Vision (ICCV)*, 2019
- **LAM HUYNH** ; **PHONG NGUYEN-HA** ; **JIRI MATAS** ; **ESA RAHTU** ; **JANNE HEIKKILÄ**. Guiding monocular depth estimation using depth-attention volume. *The European Conference on Computer Vision (ECCV)*, 2020
- **JIN HAN LEE** ; **MYUNG-KYU HAN** ; **DONG WOOK KO** ; **IL HONG SUH**. From big to small: Multi-scale local planar guidance for monocular depth estimation. *arXiv e-prints, abs/1907.10326*, July 2019
- **RAVI GARG** ; **VIJAY KUMAR B.G.** ; **GUSTAVO CARNEIRO** ; **IAN REID**. Unsupervised CNN for single view depth estimation: Geometry to the rescue. *The European Conference on Computer Vision (ECCV)*, 2016
- **CLEMENT GODARD** ; **OISIN MAC AODHA** ; **GABRIEL J. BROSTOW**. Unsupervised monocular depth estimation with leftright consistency. *Proceedings of the IEEE Conference on Computer Vision and Pattern Recognition (CVPR)*, 2017
- **YEVHEN KUZNIETSOV** ; **JORG STUCKLER** ; **BASTIAN LEIBE**. Semisupervised deep learning for monocular depth map prediction. *Proceedings of the IEEE Conference on Computer Vision and Pattern Recognition (CVPR)*, 2017
- **YUKANG GAN** ; **XIANGYU XU** ; **WENXIU SUN** ; **LIANG LIN**. Monocular depth estimation with affinity, vertical pooling, and label enhancement. *Proceedings of the European Conference on Computer Vision (ECCV)*, 2018